(19) Europäisches Patentamt / European Patent Office / Office européen des brevets

(11) **EP 4 104 195 B1**

(12) **FASCICULE DE BREVET EUROPEEN**

(45) Date de publication et mention de la délivrance du brevet:
**01.05.2024   Bulletin 2024/18**

(21) Numéro de dépôt: **21708727.9**

(22) Date de dépôt: **12.02.2021**

(51) Classification Internationale des Brevets (IPC):
*H01H 9/00* (2006.01)   *H01H 9/38* (2006.01)
*H01H 9/42* (2006.01)   *H01H 33/12* (2006.01)
*H01H 33/16* (2006.01)   *H01H 9/54* (2006.01)

(52) Classification Coopérative des Brevets (CPC):
**H01H 9/0066; H01H 9/38; H01H 9/42;**
**H01H 33/127; H01H 33/167;** H01H 9/541;
H01H 2033/163; Y02E 60/60

(86) Numéro de dépôt international:
**PCT/FR2021/050260**

(87) Numéro de publication internationale:
**WO 2021/160975 (19.08.2021 Gazette 2021/33)**

(54) **APPAREIL DE COUPURE MÉCANIQUE DE COURANT POUR COURANT CONTINU HAUTE TENSION AVEC CAPACITÉ DANS UN CHEMIN SECONDAIRE, INSTALLATION ET PROCÉDÉ AVEC UN TEL APPAREIL**

MECHANISCHE STROMABSCHALTVORRICHTUNG FÜR HOCHSPANNUNGSGLEICHSTROM MIT EINEM KONDENSATOR IN EINER SEKUNDÄREN BAHN, EINRICHTUNG UND VERFAHREN MIT EINER SOLCHEN VORRICHTUNG

MECHANICAL CURRENT CUT-OFF DEVICE FOR HIGH-VOLTAGE DIRECT CURRENT WITH A CAPACITOR IN A SECONDARY PATH, FACILITY AND METHOD USING SUCH A DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **13.02.2020   FR 2001456**

(43) Date de publication de la demande:
**21.12.2022   Bulletin 2022/51**

(73) Titulaire: **Supergrid Institute**
**69100 Villeurbanne (FR)**

(72) Inventeurs:
• **MOREL, Florent**
  **01000 BOURG-EN-BRESSE (FR)**
• **VINSON, Paul**
  **69003 LYON (FR)**
• **VU CONG, Thanh**
  **69003 LYON (FR)**
• **EL FAHIM, Nihal**
  **69100 VILLEURBANNE (FR)**
• **GIRODET, Alain**
  **69680 CHASSIEU (FR)**

(74) Mandataire: **Cabinet Beau de Loménie**
**51 avenue Jean Jaurès**
**BP 7073**
**69301 Lyon Cedex 07 (FR)**

(56) Documents cités:
**FR-A1- 2 668 648       FR-A1- 2 674 984**
**US-A1- 2016 285 250**

**Description**

**Domaine Technique**

L'invention concerne le domaine des réseaux de transmission et / ou de distribution de courant électrique continu sous haute tension, généralement désignés sous l'acronyme HVDC. L'invention porte en particulier sur les appareils de coupure mécanique de courant destinés à de tels réseaux.

Les réseaux HVDC sont notamment envisagés comme une solution à l'interconnexion de sites de production d'électricité disparates ou non synchrones. Les réseaux HVDC sont notamment envisagés pour la transmission et la distribution d'énergie produite par des fermes éoliennes offshore plutôt que des technologies de courant alternatif, du fait de pertes en ligne inférieures et d'absence d'incidence des capacités parasites du réseau sur de longues distances. De tels réseaux ont typiquement des niveaux de tension de l'ordre de 100 kV et plus.

Dans le présent texte, pour un dispositif dans lequel circule un courant continu, on considère comme dispositif à haute tension soit un dispositif à « haute tension A », dans lequel la tension de service nominale est supérieure à 1500 V en courant continu, mais inférieure ou égale à 75 000 V (75kV), soit un dispositif à « haute tension B » lorsque la tension de service nominale est supérieure à 75 000 V (75kV) en courant continu. Ainsi, le domaine de la haute tension continue inclut le domaine de la « haute tension A » et celui de la « haute tension B ».

La coupure du courant continu dans de tels réseaux est un enjeu crucial conditionnant directement la faisabilité et le développement de tels réseaux.

L'évolution de ces réseaux tend aujourd'hui vers l'interconnexion des infrastructures pour aboutir à des réseaux maillés, c'est-à-dire des réseaux comportant plusieurs cheminements possibles entre deux points donnés du réseau. Dans ces réseaux, on trouve des installations électriques, comportant notamment des postes électriques ou sous-stations électriques, dans lesquelles on trouve au moins un appareil de coupure de circuit électrique au sein d'un circuit électrique.

Dans un circuit électrique, on trouve généralement au moins une source de tension, et au moins un utilisateur de tension, qui peut comprendre tout appareil ou ensemble d'appareils ou tout réseau ayant de tels appareils qui utilisent l'énergie électrique pour la transformer en une autre forme d'énergie, par exemple en énergie mécanique, et/ou calorifique, et/ou électromagnétique, etc...

Dans un circuit électrique, on trouve généralement au moins un appareil de coupure de circuit électrique permettant d'interrompre la circulation du courant électrique dans le circuit, généralement entre la source de tension et l'utilisateur de tension, ou entre la source de tension et la terre.

On connait différents types d'appareils de coupure de circuits électriques. Par exemple, on connait les disjoncteurs, qui sont des appareils de coupure mécanique du circuit électrique et qui sont conçus et dimensionnés pour autoriser notamment une ouverture en charge ou en régime de défaut du circuit électrique dans lequel ils sont interposés. Cependant, les disjoncteurs sont des appareils complexes, chers et volumineux, et ils sont destinés aux fonctions de protection du réseau. On connait par ailleurs des appareils de coupure de circuits électriques, de conception plus simple, tels que des sectionneurs qui ne sont généralement pas conçus pour réaliser des coupures de circuits en charge, mais plutôt pour assurer, dans un circuit où la circulation de courant est déjà interrompue par un autre appareil de coupure, la sécurité des biens et des personnes lors des interventions, en assurant une isolation électrique d'un niveau élevé prédéterminé entre une portion amont du circuit, reliée par exemple à la source de tension, et une portion aval du circuit.

Dans un appareil de coupure mécanique, la coupure du courant est obtenue uniquement par l'ouverture d'un élément interrupteur mécanique. Un tel élément interrupteur mécanique comporte deux pièces conductrices faisant contact qui sont en contact mécanique et électrique lorsque l'élément interrupteur est fermé et qui se séparent mécaniquement lorsque l'élément interrupteur est ouvert. Ces appareils de coupure mécaniques présentent plusieurs inconvénients lorsqu'ils sont traversés par des courants importants.

En présence d'un courant et / ou d'une tension importante, la séparation mécanique peut se traduire par l'établissement d'un arc électrique entre les deux pièces conductrices, du fait des énergies importantes accumulées dans le réseau que l'appareil protège. Tant que l'arc électrique reste établi au travers de la séparation mécanique, l'appareil de coupure ne réalise pas la coupure électrique puisqu'un courant continue de circuler au travers de l'appareil par la présence de l'arc. La coupure électrique, au sens de l'interruption effective de la circulation du courant électrique, est parfois particulièrement difficile à réaliser dans un contexte de courant continu et de tension élevée, ces conditions tendant à entretenir l'arc électrique. Par ailleurs, cet arc électrique dégrade, d'une part, par érosion, les deux pièces conductrices faisant contact, et d'autre part, par ionisation, le milieu environnant les pièces conductrices dans lequel l'arc s'établit. Cela nécessite des opérations de maintenance de l'appareil de coupure qui sont contraignantes et coûteuses.

La coupure des courants continus sous haute tension (HVDC) est plus complexe à réaliser que celle des courants alternatifs (AC). En effet, lors de la coupure d'un courant alternatif, on profite d'un passage par zéro du courant pour réaliser la coupure électrique, ce dont on ne peut pas bénéficier avec un courant continu, notamment HVDC.

Par ailleurs il est connu d'utiliser, notamment, pour les circuits à haute tension, des appareils dits « sous enveloppe métallique » où les organes actifs de coupure sont enfermés dans une enceinte étanche, parfois appelée cuve ou enveloppe métallique, emplie d'un fluide isolant. Un tel fluide peut être un gaz, couramment de l'hexafluorure de soufre ($SF_6$), mais des liquides ou des huiles sont aussi utilisés. Ce fluide est choisi pour son caractère isolant, notamment de manière à présenter une rigidité diélectrique supérieure à celle de l'air sec à pression équivalente. Les appareils sous enveloppe métallique peuvent notamment être conçus de manière plus compacte que les appareils où la coupure et l'isolation sont réalisées dans l'air.

Un sectionneur mécanique classique « sous enveloppe métallique » comporte par exemple notamment deux électrodes qui sont maintenues, par des supports isolants, dans des positions fixes éloignées de la paroi périphérique d'une enceinte, par exemple l'enveloppe métallique, qui est au potentiel de la terre. Ces électrodes sont reliées électriquement l'une à l'autre ou séparées électriquement l'une de l'autre en fonction de la position d'un organe de connexion mobile faisant partie de l'une des électrodes, par exemple un tube coulissant actionné par une commande. Le tube est généralement porté par un corps principal d'une des électrodes, à laquelle il est relié électriquement de manière permanente, et la séparation du tube par rapport à l'électrode opposée est susceptible de créer un arc électrique. Un sectionneur se situe généralement dans une sous-station électrique. Il est connecté aux autres éléments de la sous-station, par exemple par des barres de connexion. De chaque côté du sectionneur, on peut retrouver d'autres éléments d'une sous-station comme un transformateur de puissance, une traversée aérienne, etc...

Un sectionneur mécanique comporte traditionnellement deux couples de contacts électriques. Par exemple, pour chaque couple, l'un des contacts est porté par le tube coulissant faisant partie d'une des électrodes et l'autre contact du même couple est porté par l'électrode qui ne comporte pas ce tube coulissant. Un couple de contacts principaux est celui par lequel passe le courant nominal en position complètement fermée de l'appareil. Ce chemin de passage du courant que nous nommerons chemin électrique principal est un chemin de moindre résistance électrique limitant ainsi les pertes en conduction en régime permanent. Ce couple de contacts principaux est secondé par un second couple appelé couple de contacts d'arc ou couple de contacts secondaires. Les deux contacts secondaires ont vocation à rester en contact franc lors de la séparation du couple de contacts principaux, de façon à ne pas avoir de phénomène d'arc sur le couple de contacts principaux, ce qui évite l'usure des contacts principaux. A l'inverse les contacts du couple de contacts secondaires se séparent en dernier lieu et voient s'établir l'arc électrique. Ils doivent résister à cette usure. Arrivé à une longueur d'arc suffisante, et après un temps suffisant, l'arc électrique s'interrompt.

L'utilisation d'un tel sectionneur mécanique sans dispositif spécifique pour faciliter la coupure pourrait couvrir les contraintes les plus faibles des cas de transfert de courant de charges, mais est inadaptée pour des circuits qui présentent des impédances de boucle importantes.

En effet, dans ce cas, l'ouverture peut produire des arcs électriques susceptibles de s'étirer jusqu'à des longueurs importantes et cela peut poser certains problèmes. Un arc trop long entre l'organe de connexion et l'électrode opposée peut dégénérer et évoluer en court-circuit. Par exemple, dans un sectionneur sous enveloppe métallique du type décrit ci-dessus, un arc peut s'établir entre l'électrode sous tension et la paroi de l'enceinte reliée à la terre. Dans un cas moins extrême, les temps d'extinction de l'arc peuvent être trop longs et endommager les pièces le constituant et mettre ainsi en péril l'isolation du système.

Le document WO-2019/077269 décrit un appareil de coupure mécanique comportant deux électrodes mobiles qui, pour une position de fermeture électrique complète, permettent le passage d'un courant électrique nominal au travers de l'appareil selon un chemin électrique principal. Les deux électrodes forment, pour une position intermédiaire, un chemin électrique secondaire au travers de l'appareil, le chemin électrique principal étant interrompu. L'appareil comporte, dans le chemin électrique secondaire, un parasurtenseur en série avec le couple de contacts secondaires, et un commutateur commandé susceptible de commuter un courant circulant dans le chemin électrique secondaire soit au travers du parasurtenseur, soit dans un court-circuit du parasurtenseur. Dans un mode de réalisation illustré, le commutateur commandé est un commutateur électronique à pilotage électrique, ce qui requiert, pour le commutateur électronique, une commande indépendante de la commande des électrodes. Le commutateur électronique peut présenter un surcoût non négligeable, et la nécessité de prévoir un circuit de pilotage pour ce commutateur électronique peut augmenter le coût et la complexité de l'appareil et de son intégration dans une installation. Le document FR 2 668 648 A1 décrit quant à lui un appareil de coupure mécanique selon le préambule de la revendication 1 et un procédé selon le préambule de la revendication 12.

L'invention vise à proposer un appareil de coupure de conception plus simple permettant une ouverture sous charge en limitant les risques d'arc.

**Exposé de l'invention**

L'invention concerne un appareil de coupure mécanique d'un circuit électrique haute tension, l'appareil de coupure mécanique comportant :

- une borne amont et une borne aval qui sont destinées à être reliées électriquement respectivement à une portion amont et une portion aval du circuit électrique ;
- dans un chemin électrique principal entre les bornes amont et aval de l'appareil de coupure mécanique, un interrupteur mécanique principal ayant un couple de contacts principaux qui sont mobiles l'un par rapport à l'autre entre au moins une position ouverte correspondant à un état mécaniquement ouvert de l'interrupteur mécanique principal, et au moins une position fermée correspondant à un état mécaniquement et électriquement fermé de l'interrupteur mécanique principal dans lequel les contacts principaux établissent une connexion électrique nominale de l'appareil de coupure mécanique , ladite connexion électrique nominale permettant le passage d'un courant électrique nominal au travers de l'appareil de coupure mécanique ;
- dans un chemin électrique secondaire qui est électriquement en parallèle de l'interrupteur mécanique principal entre les bornes amont et aval de l'appareil de coupure mécanique, un interrupteur mécanique secondaire, ayant un couple de contacts secondaires qui sont mobiles l'un par rapport à l'autre entre au moins une position ouverte, correspondant à un état mécaniquement ouvert de l'interrupteur mécanique secondaire, et au moins une position fermée correspondant à un état mécaniquement et électriquement fermé de l'interrupteur mécanique secondaire ;
- une commande mécanique de l'interrupteur mécanique principal et de l'interrupteur mécanique secondaire configurée de telle sorte que, dans une opération d'ouverture électrique de l'appareil de coupure mécanique, l'interrupteur mécanique secondaire est amené dans son état mécaniquement ouvert après que l'interrupteur mécanique principal a été amené dans son état mécaniquement ouvert.

L'appareil comporte un dipôle de transition comprenant une capacité, le dipôle de transition étant agencé électriquement en série du couple de contacts électriques secondaires dans le chemin électrique secondaire, et l'appareil comporte un commutateur commandé qui, dans un état électriquement fermé, crée à l'intérieur de l'appareil de coupure mécanique une dérivation qui court-circuite la capacité du dipôle de transition.

L'appareil peut en outre présenter l'une ou l'autre des caractéristiques suivantes, prises seules ou en combinaison.

Le dipôle de transition et le chemin électrique secondaire sont de préférence dépourvus de composant inductif dédié.

Le dipôle de transition peut comporter un circuit de décharge de la capacité du dipôle de transition.

Le dipôle de transition peut comporter un limiteur de tension agencé électriquement en parallèle de la capacité dans le dipôle de transition.

Le limiteur de tension peut être réalisé sous la forme d'un parasurtenseur.

Le circuit de décharge peut comporter une résistance de décharge qui est agencée en parallèle électriquement de la capacité et en parallèle électriquement du limiteur de tension du dipôle de transition.

Le commutateur commandé peut être agencé électriquement en parallèle du dipôle de transition, dans le chemin électrique secondaire, entre l'interrupteur mécanique secondaire et une borne de l'appareil de coupure mécanique.

Le commutateur commandé peut être un interrupteur mécanique tertiaire ayant un couple de contacts tertiaires qui sont mobiles l'un par rapport à l'autre entre une position ouverte correspondant à un état mécaniquement ouvert de l'interrupteur mécanique tertiaire, et une position fermée correspondant à un état mécaniquement et électriquement fermé de l'interrupteur mécanique tertiaire.

Le commutateur commandé peut être un interrupteur électronique.

Le commutateur commandé peut être agencé électriquement en parallèle du chemin électrique secondaire, et être un interrupteur mécanique tertiaire ayant un couple de contacts tertiaires qui sont mobiles l'un par rapport à l'autre entre au moins une position ouverte correspondant à un état mécaniquement ouvert de l'interrupteur mécanique tertiaire, et au moins une position fermée correspondant à un état mécaniquement et électriquement fermé de l'interrupteur mécanique tertiaire.

L'appareil de coupure mécanique peut être configuré de telle sorte que :

- dans une opération d'ouverture de l'appareil de coupure mécanique, le commutateur commandé est amené dans un état électriquement ouvert après que l'interrupteur mécanique principal a été amené dans son état mécaniquement ouvert et avant que l'interrupteur mécanique secondaire soit amené dans son état mécaniquement ouvert ;
- dans une opération de fermeture électrique de l'appareil de coupure mécanique, l'interrupteur mécanique principal et l'interrupteur mécanique secondaire sont amenés dans leur état mécaniquement et électriquement fermé après que le commutateur commandé a été amené dans un état électriquement fermé.

L'appareil de coupure mécanique peut comporter une commande mécanique de l'interrupteur mécanique tertiaire, et la commande mécanique des interrupteurs principal, secondaire et tertiaire peut être configurée de telle sorte que :

- dans une opération d'ouverture de l'appareil de coupure mécanique, l'interrupteur mécanique tertiaire est amené dans son état mécaniquement ouvert après que l'interrupteur mécanique principal a été amené dans son état mécaniquement ouvert et avant que l'interrupteur mécanique secondaire soit amené dans son état mécaniquement ouvert ;
- dans une opération de fermeture de l'appareil de coupure mécanique, l'interrupteur mécanique principal et l'interrupteur mécanique secondaire sont amenés dans leur état mécaniquement et électriquement fermé après que le commutateur commandé sous forme d'interrupteur mécanique tertiaire a été amené dans son état mécaniquement et électriquement fermé.

Dans une opération de fermeture de l'appareil de coupure mécanique, l'interrupteur mécanique secondaire peut être amené dans son état mécaniquement et électriquement fermé après que l'interrupteur mécanique principal a été amené dans son état électriquement et mécaniquement fermé.

Dans une opération de fermeture de l'appareil de coupure mécanique, l'interrupteur mécanique secondaire peut être amené dans son état mécaniquement et électriquement fermé avant que l'interrupteur mécanique principal ait été amené dans son état électriquement et mécaniquement fermé.

L'appareil de coupure mécanique peut comporter deux électrodes :

- qui sont reliées électriquement respectivement à la borne amont et à la borne aval de l'appareil de coupure mécanique,
- qui portent chacune l'un des contacts des couples de contacts principaux, secondaires et tertiaires,

- et qui sont mobiles l'une par rapport à l'autre selon un mouvement relatif d'ouverture et un mouvement relatif de fermeture, entre au moins une position d'ouverture électrique correspondant à un état électriquement ouvert de l'appareil de coupure mécanique et une position de fermeture électrique complète correspondant à un état électrique fermé de l'appareil de coupure mécanique dans laquelle les électrodes établissent, au travers du couple de contacts principaux, la connexion électrique nominale de l'appareil de coupure mécanique.

Dans un tel cas, sur chacune des deux électrodes, le contact principal et le contact tertiaire peuvent présenter une position fixe sur l'électrode considérée ;

Dans un tel cas, pour une position relative donnée des deux électrodes dans leur mouvement d'ouverture ou de fermeture, le couple de contact principaux et le couple de contacts tertiaires présentent un écartement relatif entre les contacts du couple qui est différent, de telle sorte que, dans une opération d'ouverture de l'appareil de coupure mécanique pour l'amener de son état fermé à son état ouvert, pour une position intermédiaire ou une plage de positions intermédiaires des électrodes entre la position d'ouverture électrique et la position de fermeture électrique complète, le chemin électrique principal est interrompu au niveau du couple de contacts principaux tandis qu'un chemin électrique reste fermé au niveau du couple de contacts tertiaires;

Dans un tel cas, l'un au moins des contacts du couple de contacts secondaires est mobile sur l'électrode qui le porte, entre une configuration d'ouverture adoptée lors du mouvement d'ouverture et une configuration de fermeture adoptée lors du mouvement de fermeture, les configurations d'ouverture et de fermeture correspondant à un écartement relatif différent entre les deux contacts du couple de contacts secondaires pour une même position relative donnée des deux électrodes, de telle sorte que :

- lors du mouvement d'ouverture, le couple de contacts secondaires se sépare après les couples de contacts principaux et tertiaires ;
- lors du mouvement de fermeture, le couple de contacts secondaires entre en contact après le couple de contacts tertiaires.

Dans un appareil selon l'invention, les mouvements relatifs de fermeture et d'ouverture des électrodes et les mouvements relatifs de fermeture et d'ouverture entre les deux contacts des couples de contacts principaux et tertiaires peuvent être les mêmes et peuvent être des mouvements de translation, et les deux configurations des couples de contacts secondaires peuvent correspondre à deux positions relatives différentes des deux contacts secondaires selon la direction de translation pour une même position relative des électrodes.

L'invention concerne aussi une installation électrique comportant au moins un appareil de coupure mécanique ayant l'une quelconque des caractéristiques précédentes.

L'invention concerne aussi une installation électrique, caractérisée en ce qu'elle comporte un premier circuit électrique entre un premier point et un deuxième point, un second circuit électrique, électriquement en parallèle du premier circuit électrique entre le premier point et le second point, et un appareil de coupure mécanique ayant l'une quelconque des caractéristiques ci-dessus dans au moins l'un des circuits pour couper le courant électrique dans le circuit.

L'invention concerne aussi un procédé de coupure d'un circuit électrique haute tension mettant en oeuvre un appareil de coupure mécanique ayant une borne amont et une borne aval qui sont destinées à être reliées électriquement respectivement à une portion amont et une portion aval du circuit électrique, dans lequel :

- on ouvre mécaniquement et électriquement un chemin électrique principal, entre les bornes amont et aval de l'appareil de coupure mécanique, qui permet le passage d'un courant électrique nominal, pour faire basculer le courant dans un chemin électrique secondaire qui est électriquement en parallèle du chemin électrique principal entre les bornes amont et aval de l'appareil de coupure mécanique de manière à charger une capacité insérée dans le chemin électrique secondaire ;
- après l'expiration d'un délai suivant l'ouverture du chemin électrique principal, on ouvre mécaniquement et électriquement le chemin électrique secondaire.

Dans un tel procédé, lors de l'ouverture du chemin électrique principal, on peut basculer le courant électrique d'abord dans un chemin électrique tertiaire qui est électriquement en parallèle du chemin électrique principal entre les bornes amont et aval de l'appareil de coupure mécanique avant de le basculer vers le chemin électrique secondaire.

Dans de tels procédés, on peut limiter la tension aux bornes de la capacité par la présence d'un limiteur de tension électriquement en parallèle de la capacité dans le chemin électrique secondaire.

**Brève description des dessins**

**[Fig. 1]** La figure **1** est une vue schématique d'un exemple de réseau électrique à haute tension dans lequel l'invention peut être mise en oeuvre.

**[Fig. 2]** La figure **2** représente un schéma électrique d'un réseau dans lequel l'invention peut être mise en oeuvre.

**[Fig. 3A]** La figure 3A représente schématiquement un appareil de coupure mécanique du type dit « sous enveloppe métallique » dans un état électriquement fermé.

**[Fig. 3B]** La figure 3B représente schématiquement l'appareil de la Fig. 3A dans une position intermédiaire d'un organe de connexion mobile.

**[Fig. 3C]** La figure 3C représente schématiquement l'appareil de la Fig. 3A dans un état mécaniquement ouvert.

**[Fig. 4A]** La figure 4A représente schématiquement un appareil de coupure mécanique dans un état mécaniquement ouvert.

**[Fig. 4B]** La figure 4B représente schématiquement l'appareil de la Fig. 4A dans une position intermédiaire d'un organe de connexion mobile, dans une configuration de fermeture.

**[Fig. 4C]** La figure 4C représente schématiquement l'appareil de la Fig. 4A dans une autre position intermédiaire de son organe de connexion mobile dans une configuration d'ouverture.

**[Fig. 5A]** La figure 5A représente schématiquement un appareil de coupure selon une première architecture électrique.

**[Fig. 5B]** La figure 5B représente schématiquement un appareil de coupure selon une deuxième architecture électrique.

**[Fig. 6A]** La figure 6A représente schématiquement l'appareil de la Fig. 5A dans un état électriquement fermé.

**[Fig. 6B]** La figure 6B représente schématiquement l'appareil de la Fig. 5A dans un état intermédiaire.

**[Fig. 6C]** La figure 6C représente schématiquement l'appareil de la Fig. 5A dans un autre état intermédiaire.

**[Fig. 6D]** La figure 6D représente schématiquement l'appareil de la Fig. 5A dans un état électriquement ouvert.

**[Fig. 7]** La figure 7 représente des graphes qui illustrent schématiquement la variation de différents paramètres d'un circuit lors d'une opération d'ouverture d'un appareil selon l'invention.

**[Fig. 8]** La figure 8 représente des graphes qui illustrent schématiquement la variation de différents paramètres d'un circuit lors d'une partie de l'ouverture d'un appareil selon l'invention.

**[Fig. 9]** La figure 9 représente des graphes qui illustrent schématiquement la variation de différents paramètres d'un circuit lors d'une autre partie de l'ouverture d'un appareil selon l'invention.

**[Fig. 10]** La figure 10 représente des graphes qui illustrent schématiquement la variation de différents paramètres d'un circuit lors d'encore une autre partie de l'ouverture d'un appareil selon l'invention.

**[Fig. 11A]** La figure 11A représente schématiquement l'appareil de la Fig. 5A dans un état électriquement ouvert.

**[Fig. 11B]** La figure 11B représente schématiquement l'appareil de la Fig. 5A dans un état intermédiaire.

**[Fig. 11C]** La figure 11C représente schématiquement l'appareil de la Fig. 5A dans un autre état intermédiaire.

**[Fig. 11D]** La figure 11D représente schématiquement l'appareil de la Fig. 5A dans un état électriquement fermé.

**[Fig. 12]** La figure 12 représente des graphes qui illustrent schématiquement la variation de différents paramètres d'un circuit lors d'une opération de fermeture d'un appareil selon l'invention.

**[Fig. 13A]** La figure 13A représente schématiquement l'appareil des Figs. 4A-4C dans un état électriquement et mécanique fermé.

**[Fig. 13B]** La figure 13B représente schématiquement l'appareil des Figs. 4A-4C dans un état intermédiaire lors d'une opération d'ouverture.

**[Fig. 13C]** La figure 13C représente schématiquement l'appareil des Figs. 4A-4C dans un autre état intermédiaire lors d'une opération d'ouverture.

**[Fig. 13D]** La figure 13D représente schématiquement l'appareil des Figs. 4A-4C dans un état mécaniquement et électriquement ouvert.

**[Fig. 14A]** La figure 14A représente schématiquement l'appareil des Figs. 4A-4C dans un état électriquement et mécaniquement ouvert.

**[Fig. 14B]** La figure 14B représente schématiquement l'appareil des Figs. 4A-4C dans un état intermédiaire lors d'une opération de fermeture.

**[Fig. 14C]** La figure 14C représente schématiquement l'appareil des Figs. 4A-4C dans un autre état intermédiaire lors d'une opération de fermeture.

**[Fig. 14D]** La figure 14D représente schématiquement l'appareil des Figs. 4A-4C dans un état mécaniquement et électriquement fermé.

**[Fig. 15A]** La figure 15A représente schématiquement une variante de l'appareil des Figs. 4A-4C dans un état électriquement et mécaniquement ouvert.

**[Fig. 15B]** La figure 15B représente schématiquement la même variante dans un état intermédiaire lors d'une opération de fermeture.

**[Fig. 15C]** La figure 15C représente schématiquement la même variante dans un autre état intermédiaire lors d'une opération de fermeture.

**[Fig. 15D]** La figure 15D représente schématiquement l'appareil des Figs. 4A-4C dans encore un autre état intermédiaire, lors d'une opération d'ouverture.

**Description des modes de réalisation**

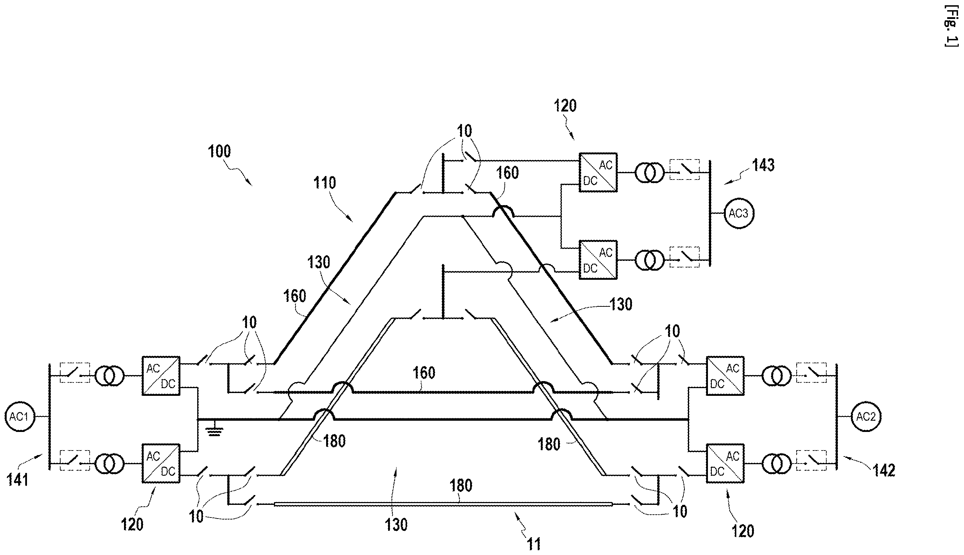

La **Fig. 1** illustre un système **100** de réseau électrique à haute tension dans lequel l'invention peut être mise en oeuvre. Ce système de réseau **100** comporte une portion de réseau électrique à haute tension continue **110,** par exemple sous « haute tension B », qui est reliée, par des systèmes de convertisseurs alternatifs/continu **120,** à différentes portions de réseau électrique à haute tension alternative **141, 142, 143,** ici au nombre de trois. Dans l'exemple illustré, la portion de réseau électrique à haute tension continue **110** comporte trois sous-portions de réseau à haute tension continue **130,** dont chacune relie un système de convertisseurs **120** associé à une portion de réseau à haute tension alternative **141, 142, 143** avec un autre système de convertisseurs **120** associé à une autre portion de réseau à haute tension alternative **141, 142, 143.** Dans l'exemple illustré, les trois sous-portions de réseau à haute tension continue **130** relient donc les trois portions de réseaux à haute tension alternatives **141, 142, 143** selon une configuration en triangle.

Chaque sous-portion de réseau à haute tension continue **130** peut par exemple comporter notamment un conducteur haute tension continue au potentiel positif **160** et un conducteur haute tension continue au potentiel négatif **180** et, généralement, une liaison au potentiel neutre, par exemple à la terre. Dans l'exemple illustré, chaque conducteur haute tension continue **160, 180** détermine un circuit électrique à haute tension continue. La portion de réseau électrique à haute tension continue **110** comporte, dans les circuits électriques à haute tension continue définis par les conducteurs haute tension continue **160, 180,** des appareils de coupure **10** d'un circuit électrique dont chacun peut se trouver dans un état électriquement ouvert dans lequel il interrompt la circulation de courant électrique dans le circuit électrique considéré, ou dans une partie de celui-ci, ou dans un état électriquement fermé dans lequel il permet la circulation d'un courant électrique dans le circuit électrique considéré. Un tel appareil de coupure **10** est amené de son état électriquement fermé à son état électriquement ouvert par une opération d'ouverture, et il est amené de son état électriquement ouvert à son état électriquement fermé par une opération de fermeture.

Les appareils de coupure **10** d'un circuit électrique peuvent être notamment de type sectionneur. Les appareils de coupure d'un circuit électrique peuvent notamment être des appareils mécaniques, dans lesquels la coupure électrique est obtenue par déplacement, notamment par écartement, de deux contacts électriques ou plusieurs paires de contacts électriques. Dans ce cas, le déplacement des contacts électriques est généralement réalisé par une commande mécanique qui comprend de préférence au moins un actionneur mécanique, pneumatique, hydraulique ou électrique, et éventuellement une transmission entre l'actionneur et les contacts électriques. La transmission possède une cinématique de transmission du mouvement qui transforme un mouvement de l'actionneur en un mouvement relatif des contacts. Ce déplacement peut être contrôlé électroniquement, par exemple par une unité de contrôle électronique pilotant l'actionneur.

Dans un réseau haute tension continue, par exemple du type de la portion de réseau haute tension continue **110** décrite ci-dessus, on peut être amené à conduire des manoeuvres de transfert de courant de ligne en charge par les sectionneurs.

Ces manoeuvres de transfert interviennent pour réorienter le flux de puissance entre des portions de réseau tout en continuant à desservir tous les clients du réseau. Dans le schéma de la **Fig. 1,** représentant un exemple, la portion de réseau **143** génère une puissance électrique qui est en partie consommée dans les portions de réseau **141** et **142.** Pour diverses raisons, liées par exemple à des nécessités de maintenance ou de réorganisation des flux, le lien entre les portions de réseau **143** et **142** doit être interrompu.

Cela se fait en ouvrant au moins un ou deux des appareils de coupure **10** dans les circuits électriques reliant les portions de réseau **143** et **142.** Par exemple, on ouvre un appareil de coupure **10** de la sous-portion de réseau à haute tension continue **130** qui relie les portions de réseau **143** et **142.**

La puissance apportée par la portion de réseau **143** peut continuer à alimenter les portions de réseau **141** et **142,** mais les flux sont modifiés car il n'y a plus de puissance transitant directement entre les portions de réseau **143** et **142.**

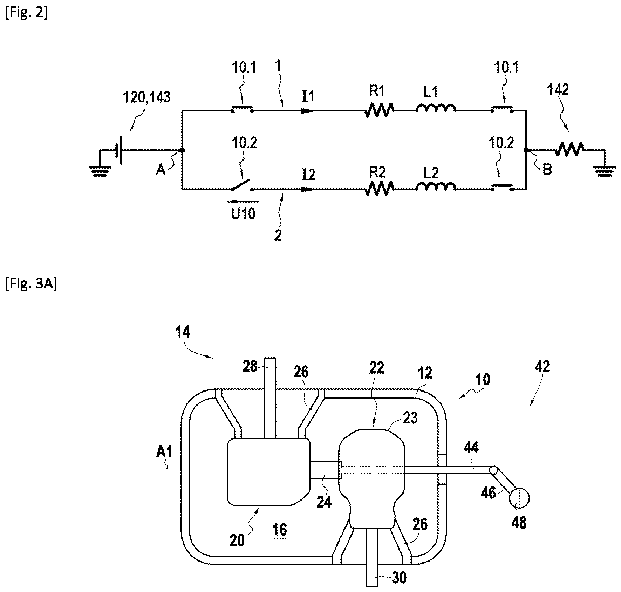

Autrement dit, comme cela est illustré dans le schéma électrique équivalent de la **Fig. 2,** lors de l'ouverture du circuit électrique direct **2** entre les portions de réseau **143** et **142,** par ouverture d'un sectionneur **10.2,** un circuit parallèle **1** existe pour ne pas interrompre le flux de puissance et la manoeuvre de transfert de courant peut être réalisée, le ou les sectionneurs **10.1** demeurant dans un état de fermeture électrique. Les circuits parallèles **1** et **2** s'étendent chacun entre un point de jonction **A** et un point de jonction **B,** qui sont donc communs aux deux circuits parallèles **1** et **2.** Entre ces deux points de jonction **A** et **B,** les circuits parallèles **1** et **2** n'ont pas de liaison électrique entre eux.

Grâce à l'invention, on pourra réaliser de telles manoeuvres de transfert par une opération d'ouverture d'un appareil de coupure mécanique, notamment de type sectionneur, y compris lorsqu'il n'y a pas de disjoncteur dans le circuit électrique associé à cet appareil de coupure mécanique.

Dans le cas envisagé dans le cadre de l'invention, parce qu'il subsiste un circuit électrique parallèle, la tension **U10** aux bornes de l'appareil de coupure mécanique **10.2,** en l'occurrence le sectionneur **10.2,** après l'opération d'ouverture de l'appareil de coupure mécanique **10.2,** est égale à la chute de tension le long du circuit parallèle **1.** Cette chute de tension est, en tension continue, égale pour l'essentiel à $R1 \times I1,$ avec **R1** la résistance équivalente du circuit électrique parallèle **1** et **I1** la valeur de l'intensité électrique dans le circuit électrique parallèle **1** lorsque le courant **I2** dans le circuit électrique direct **2** est nul. Dans une application d'un réseau sous « haute tension B », cette chute de tension le long du circuit parallèle **1** est par exemple de l'ordre de 1000 volts, par exemple comprise entre 500 et 5000 volts.

Dans l'exemple de réalisation, l'appareil de coupure mécanique **10** est un sectionneur. Dans l'exemple, l'appareil de coupure mécanique est prévu pour couper un unique circuit électrique, mais l'invention pourrait être mise en oeuvre dans un appareil prévu pour couper plusieurs circuits électriques, comportant alors, par exemple au sein d'une même enceinte, plusieurs dispositifs de coupure en parallèle.

L'invention va plus particulièrement être décrite dans le cadre d'un appareil de coupure mécanique du type dit « sous enveloppe métallique ». Un tel appareil est illustré schématiquement aux **Figs. 3A à 3C**. Cependant, l'appareil peut être un appareil à l'air libre.

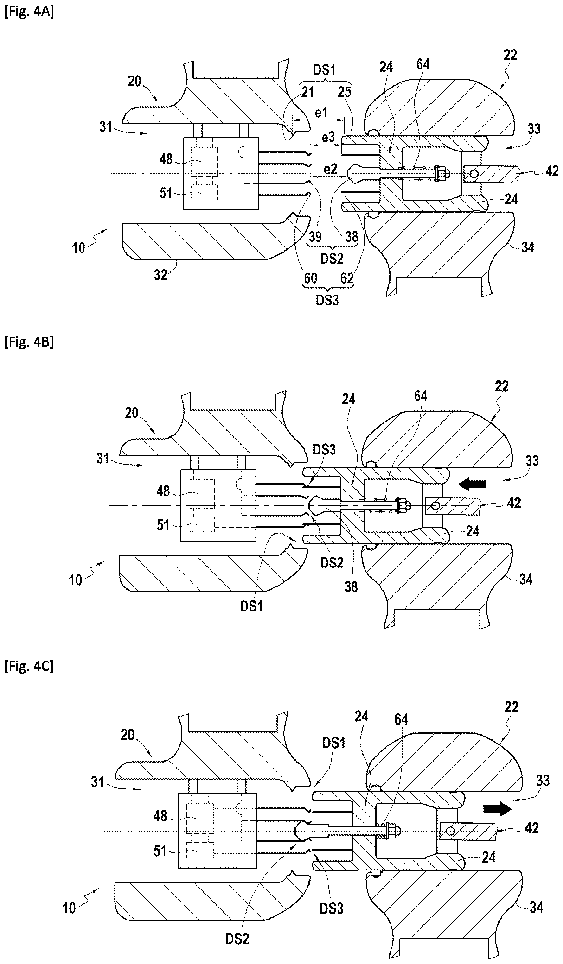

Un détail d'un mode de réalisation particulier est illustré de manière plus détaillée, mais encore schématique, aux **Figs. 4A-4C.** qui montrent plus particulièrement un mode de réalisation d'un appareil ayant différents couples de contacts qui se séparent ou entrent en contact pour des positions différentes d'un contact mobile de l'appareil.

L'appareil de coupure mécanique **10** comporte ainsi une enceinte **12** qui délimite un volume interne **16** de l'enceinte **12**. De préférence, en fonctionnement de l'appareil, l'enceinte **12** est étanche par rapport à l'extérieur de l'enceinte **12**. L'enceinte **12** peut comporter une ou plusieurs ouvertures (non représentées) permettant, au moins pour des opérations de maintenance ou de montage, l'accès au volume interne **16** depuis l'extérieur de l'enceinte, ou permettant au volume **16** d'être mis en communication avec un autre volume d'une autre enceinte accolée à l'enceinte **12** autour de l'ouverture. Les ouvertures sont donc destinées à être obturées, par exemple par des hublots ou des couvercles, ou sont destinées à mettre en communication le volume interne **16** de l'enceinte **12** avec une autre enceinte elle-même étanche, par mise en correspondance étanche de l'ouverture avec une ouverture correspondante de l'autre enceinte. Grâce à cette étanchéité, le volume interne **16** de l'enceinte **12** peut être empli d'un fluide isolant qui peut être séparé de l'air atmosphérique. Le fluide peut être un gaz ou un liquide. La pression du fluide peut être différente de la pression atmosphérique, par exemple une pression supérieure à 3 bars absolus, ou peut être une pression très faible, typiquement inférieure à 1 millibar, éventuellement proche du vide. Le vide serait, au sens de l'invention, assimilé à un fluide isolant. Le fluide isolant peut être de l'air, notamment de l'air sec, de préférence à une pression supérieure à la pression atmosphérique, notamment supérieure à 3 bars absolus. Cependant, de préférence, le fluide est choisi pour ses hautes propriétés isolantes, en ayant par exemple une rigidité diélectrique supérieure à celle de l'air sec dans des conditions de température et de pression équivalentes. Ainsi, le fluide peut être de l'hexafluorure de soufre ($SF_6$), sous une pression supérieure à 3 bars absolus.

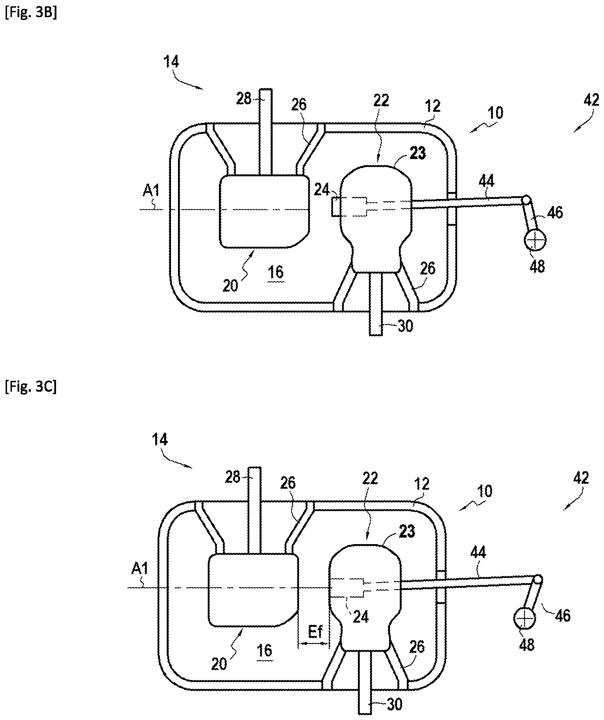

De certains modes de réalisation, dont celui illustré aux **Figs. 3A-3C** et **Figs. 4A-4C,** l'appareil de coupure mécanique **10** comporte au moins deux électrodes qui sont destinées à être reliées électriquement respectivement à une portion amont et une portion aval du circuit électrique à couper. Les deux électrodes sont mobiles l'une par rapport à l'autre selon un mouvement d'ouverture et un mouvement de fermeture, entre au moins une position relative de fermeture électrique complète, illustrée à la **Fig. 3A,** dans laquelle elles établissent une connexion électrique nominale de l'appareil, et correspondant donc à un état électriquement fermé de l'appareil de coupure mécanique, et une position relative d'ouverture électrique, illustrée à la **Fig. 3C** et correspondant à un état électriquement ouvert de l'appareil de coupure mécanique. Dans l'exemple illustré, l'appareil de coupure mécanique **10** comporte notamment une première électrode fixe **20** et une deuxième électrode **22** qui comporte un corps principal fixe **23** et un organe de connexion mobile **24**. On comprend que l'organe de connexion mobile pourrait faire partie de la première électrode **20,** ou que chacune des deux électrodes **20, 22** pourrait comprendre un organe de connexion mobile.

Dans l'exemple illustré, chaque électrode **20, 22** est fixée dans l'enceinte **12** par l'intermédiaire d'un support isolant **26.** A l'extérieur de l'enceinte **12,** l'appareil de coupure mécanique **10** comporte, pour chaque électrode, une borne de raccordement **28, 30** qui est reliée électriquement à l'électrode **20, 22** correspondante. L'une des bornes est destinée à être reliée à une portion amont du circuit électrique tandis que l'autre des bornes est destinée à être reliée à une portion aval du circuit électrique. De manière arbitraire, et sans que cela n'ait de signification particulière quant à la polarité ou au sens de circulation du courant, on qualifiera de portion amont du circuit électrique la portion qui est reliée à la première électrode **20,** par la borne de raccordement **28,** laquelle peut donc être qualifiée de borne amont. En conséquence, la portion aval du circuit électrique est la portion qui est reliée à la seconde électrode **22,** par la borne de raccordement **30,** laquelle peut donc être qualifiée de borne aval.

Dans l'exemple, chaque électrode **20, 22** est reliée électriquement de façon permanente à la borne de raccordement **28, 30** associée, quel que soit l'état ouvert ou fermé de l'appareil de coupure mécanique.

Comme indiqué plus haut, l'appareil de coupure mécanique **10** est destiné à être inclus dans une installation électrique **100** comprenant un circuit électrique haute tension continue **2,** dont un exemple est illustré sur la **Fig. 1** par l'un ou l'autre des conducteurs à haute tension continue **160, 180.** Dans une telle installation, on peut alors considérer que la première électrode **20** est reliée électriquement à une portion amont du circuit électrique comprenant une source de tension **120** qui peut être une source principale, telle qu'un générateur de tension, ou une source secondaire telle qu'un convertisseur. Dans la portion amont du circuit électrique haute tension continue **2,** notamment entre la source de tension **120** et l'appareil de coupure mécanique **10,** on peut trouver toutes sortes d'appareils électriques. De même, dans la partie aval du circuit électrique haute tension continue **2,** on peut trouver toutes sortes d'appareils électriques.

Les corps principaux des deux électrodes **20, 22** sont disposés dans le volume interne **16** de manière fixe, écartés de la paroi périphérique de l'enceinte **12,** et écartés l'un de l'autre de telle sorte qu'un espace d'isolement électrique inter-électrodes est aménagé selon la direction d'un axe central **A1,** entre les portions en vis-à-vis de leur surfaces périphériques externes respectives.

Dans l'exemple illustré, l'organe de connexion mobile **24** de la seconde électrode de l'appareil de coupure mécanique peut comporter un tube coulissant, d'axe **A1,** qui est guidé en coulissement selon l'axe central **A1,** qui sera arbitrairement qualifié de longitudinal, dans la seconde électrode **22.** Dans l'exemple illustré, l'organe de connexion mobile **24** est réalisé de préférence en matériau conducteur, par exemple en métal. Dans l'exemple illustré, l'organe de connexion mobile **24** est relié électriquement au corps principal **23** de la seconde électrode **22,** donc relié électriquement avec la borne de raccordement associée **30** de façon permanente, quelle que soit la position de l'organe de connexion mobile **24.**

L'organe de connexion **24** est mobile selon un mouvement d'ouverture par rapport à l'électrode opposée **20,** entre une position relative de fermeture électrique complète, visible sur la **Fig. 3A,** et dans laquelle l'organe de connexion électrique **24** établit une connexion électrique nominale avec ladite électrode opposée **20** au travers d'un couple de contacts principaux portés chacun par une des électrodes, et une position relative d'ouverture électrique, visible sur la **Fig. 3C,** en passant par des positions relatives intermédiaires telles que celle illustrée à la **Fig. 3B.** De manière connue, l'organe de connexion **24** peut être déplacé, par une commande mécanique **42.** Dans cet exemple de réalisation, la commande mécanique **42** comporte, en tant que transmission, une bielle **44** qui est mobile selon une direction sensiblement parallèle à l'axe **A1,** qui est commandée par un levier **46** rotatif, et qui contrôle le déplacement de l'organe de connexion mobile selon l'axe **A1** entre la position d'ouverture électrique et la position de fermeture complète. Cette commande mécanique peut comprendre au moins un actionneur mécanique, pneumatique, hydraulique ou électrique, par exemple agissant directement ou indirectement sur le levier **46** rotatif. La transmission, comprenant ici la bielle **44** et le levier **46,** possède une cinématique de transmission du mouvement qui transforme un mouvement de l'actionneur en un mouvement relatif des contacts. Une unité de contrôle électronique peut être prévue pour piloter l'éventuel actionneur.

Pour atteindre sa position relative de fermeture électrique complète, l'organe de connexion **24** est déplacé longitudinalement selon l'axe central **A1** en direction de la première électrode **20,** en travers de l'espace d'isolement électrique inter-électrodes. Dans la suite du texte, on considère que la position relative de fermeture électrique complète est la position de dernier contact électrique entre les deux électrodes au travers d'un couple de contacts principaux, dont un est porté par chaque électrode, dans le sens de l'ouverture de l'appareil de coupure mécanique. Pour cette position relative de fermeture électrique complète, une circulation de courant électrique est possible par conduction au travers d'un contact mécanique entre les contacts principaux respectifs des deux électrodes. Dans certains appareils, il peut exister une course morte entre une position extrême de fermeture électrique et la position de dernier contact électrique entre les deux électrodes, dans le sens de l'ouverture de l'appareil de coupure mécanique. Sur cette course morte, une circulation de courant électrique est possible par conduction au travers d'un contact mécanique entre les contacts principaux respectifs des deux électrodes.

Dans l'exemple illustré, dans la position de fermeture électrique complète de la **Fig. 3A,** l'organe de connexion mobile **24** est en contact direct avec le corps de la première électrode **20** par contact mécanique entre un contact principal **21** (illustré aux **Figs. 4A-4C**) porté par le corps de la première électrode **20,** et un contact principal **25** (illustré aux **Figs. 4A-4C**) de l'organe de connexion mobile **24** qui, dans le mode de réalisation particulier illustré aux **Figs. 4A-4C,** est une portion cylindrique de l'extrémité avant **25** du tube coulissant **36.** Dans cet état électriquement fermé de l'appareil de coupure mécanique **10,** le courant électrique nominal, ou tout du moins une grande partie de celui-ci, circule selon un chemin électrique **2P** principal, qui est continu, en l'occurrence directement entre l'organe de connexion mobile **24** et le corps principal de la première électrode **20,** au travers du couple de contacts principaux **21, 25.** L'organe de connexion mobile **24** forme donc, avec le corps de la première électrode, au niveau du couple de contacts principaux **21, 25,** un interrupteur mécanique principal **DS1.**

De manière générale, l'interrupteur mécanique principal **DS1** est interposé électriquement dans le chemin électrique principal **2P** sans autre interrupteur électrique, sans composant inductif dédié dans le chemin électrique principal entre les deux bornes **28, 30** de l'appareil de coupure mécanique **10.** Toute inductance ou impédance parasite dans le chemin électrique principal **2P** sera bien entendu réduite à la plus petite valeur possible.

Dans ce mode de réalisation de l'invention, les deux électrodes **20, 22, 24** comportent un couple de contacts secondaires **38, 39** qui forment, par leur contact, pour une plage de positions intermédiaires des électrodes entre la position d'ouverture électrique et la position de fermeture électrique complète, un chemin électrique secondaire pour le courant électrique au travers de l'appareil de coupure mécanique.

Dans le mode de réalisation particulier illustré aux **Figs. 4A-4C,** la première électrode **20** comporte un contact secondaire formé par un contacteur **39** qui est destiné à être en contact avec l'organe de connexion **24** lorsque l'appareil de coupure mécanique est dans un état de fermeture intermédiaire, dans cet exemple plus particulièrement avec un contact secondaire de l'organe de connexion **24**, réalisé sous la forme d'un contacteur **38.** Au contraire, lorsque l'organe de connexion **24** a atteint une position d'ouverture, tel qu'illustré à la **Fig. 4A,** le contact électrique entre le contact secondaire **38** de l'organe de connexion mobile **24** et le contact secondaire **39** de la première électrode **20** est rompu.

Dans l'exemple, le contact secondaire **39** de la première électrode **20** est relié électriquement au corps 21 de la première électrode, donc à la portion amont du circuit électrique **2.** Le contact secondaire **38** de la seconde électrode **22** est relié électriquement à l'organe mobile **24,** et donc à la portion aval du circuit électrique **2.**

Dans l'exemple, le contact secondaire **39** de la première électrode **20** est fixe et s'étend selon une géométrie tubulaire d'axe **A1,** de manière à délimiter un alésage interne ouvert selon l'axe **A1.** Dans l'exemple, il peut être réalisé sous la forme de plusieurs lames de contact conductrices, qui s'étendent chacune dans un plan radial contenant l'axe **A1,** disposées autour de l'axe **A1** suivant cette géométrie tubulaire, et comportant toutes une extrémité libre de contact à une même distance radiale de l'axe **A1.** Le contact secondaire **38** de la seconde électrode **22,** ici porté par l'organe de connexion mobile **24** et relié électriquement de manière permanente à celui-ci, est configuré, pour toutes les positions de la plage de positions intermédiaires relatives des électrodes pour laquelle le chemin électrique secondaire est formé, pour être engagé dans l'alésage interne du contacteur **39** de la première électrode **20,** en assurant un contact électrique entre les deux contacts secondaires. Ceci est illustré à la **Fig. 4C.** Dans l'exemple, le contact secondaire **38** de la seconde électrode est réalisé sous la forme d'une tige de contact d'axe **A1** portée à l'extrémité libre de l'organe mobile **24.** En position électriquement fermée de l'interrupteur mécanique secondaire **DS2,** l'extrémité libre de contact de chacune des lames de contact conductrices formant le contact secondaire **39** est en appui sur une surface externe du contact secondaire **38** en forme de tige de contact. Au contraire, au-delà de la position d'ouverture électrique, le contact entre les deux contacts secondaires **38, 39** est perdu. L'organe de connexion mobile **24** forme donc, avec le corps de la première électrode, au niveau du couple de contacts secondaires **38, 39,** un interrupteur mécanique secondaire **DS2.**

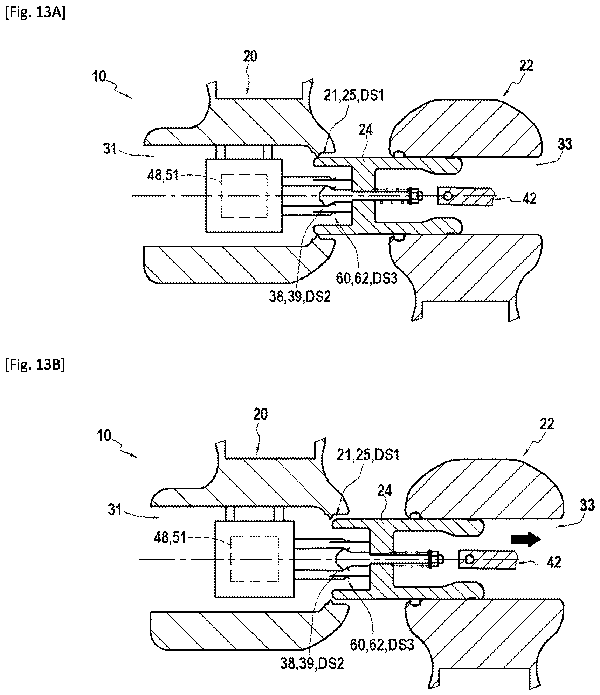

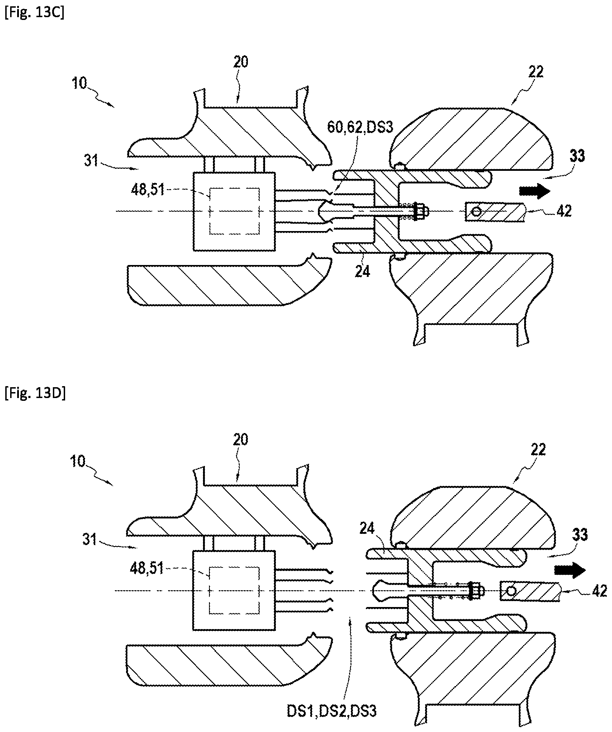

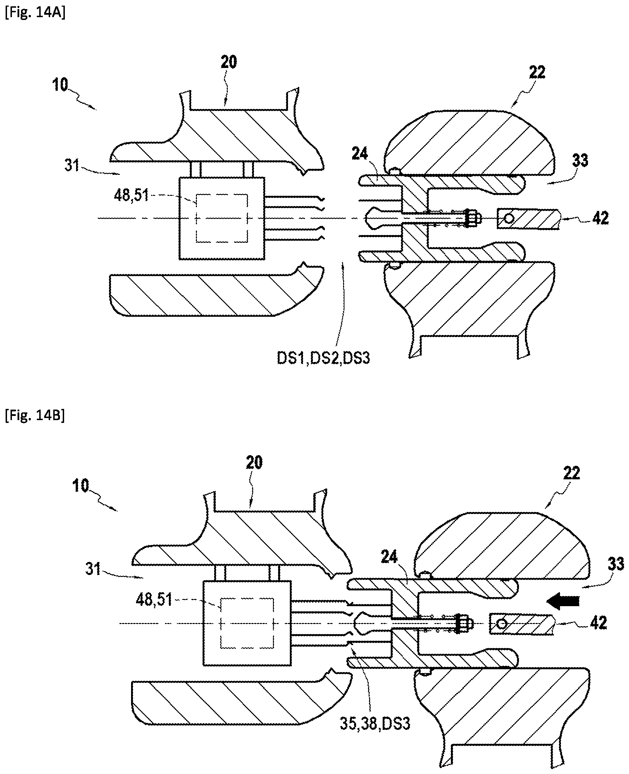

Dans l'exemple illustré, le contact secondaire **38** de la seconde électrode est avantageusement mobile sur l'électrode qui le porte, entre une configuration d'ouverture de l'appareil de coupure mécanique **10** qui est adoptée lors du mouvement d'ouverture **(Fig. 4C)** et une configuration de fermeture de l'appareil de coupure mécanique **10** qui est adoptée lors du mouvement de fermeture **(Fig. 4B).** Dans l'exemple des **Figs. 4A-4C,** aussi illustré sur les **Figs 13A-13D** et **14A-14D,** c'est notamment donc l'interrupteur mécanique secondaire **DS2** qui présente deux configurations différentes par rapport aux électrodes pour modifier la configuration de l'appareil de coupure mécanique **10.** Ces deux configurations de l'interrupteur mécanique secondaire **DS2,** et par conséquent de l'appareil de coupure mécanique **10,** permettent d'obtenir un premier contact des deux contacts secondaires lors de la fermeture et un dernier contact des deux contacts secondaires **38, 39** lors de l'ouverture qui correspondent à des positions relatives différentes de deux électrodes, plus particulièrement, dans ce mode de réalisation, à des positions relatives différentes de l'organe de connexion mobile **24** par rapport à la première électrode **20.** Cependant, on pourrait prévoir que la configuration d'ouverture et la configuration de fermeture de l'appareil de coupure mécanique **10** correspondent à deux configurations différentes du commutateur commandé **DS3** et/ou de l'interrupteur mécanique principal **DS1,** en plus ou à la place de l'existence de deux configurations différentes de l'interrupteur mécanique secondaire **DS2.**

Les couples de contacts principaux **21, 25** et secondaires **38, 39** sont conçus et disposés de telle sorte que, pour une plage de positions intermédiaires des électrodes pour laquelle ou lesquelles les contacts secondaires sont en contact l'un avec l'autre, les contacts principaux sont écartés l'un de l'autre pour interrompre le chemin électrique principal. Dans l'exemple illustré, pour une position relative d'ouverture des électrodes, l'écartement « e1 » entre les deux contacts principaux **21, 25** est supérieur à l'écartement « e2 » entre les deux contacts secondaires **38, 39,** en tous cas lors d'une opération d'ouverture.

Dans l'exemple illustré, chacun des couples de contact principaux et secondaires comporte un premier contact **21, 39** porté par la première **20** des deux électrodes et un second contact **25, 38** porté par la seconde **22** des deux électrodes, en l'occurrence par son organe mobile **24.** Ainsi, chacun des couples de contact principaux et secondaires présente un mouvement relatif de fermeture et un mouvement relatif d'ouverture entre les deux contacts qui est le même que les mouvements relatifs d'ouverture et de fermeture des deux électrodes **20, 22.**

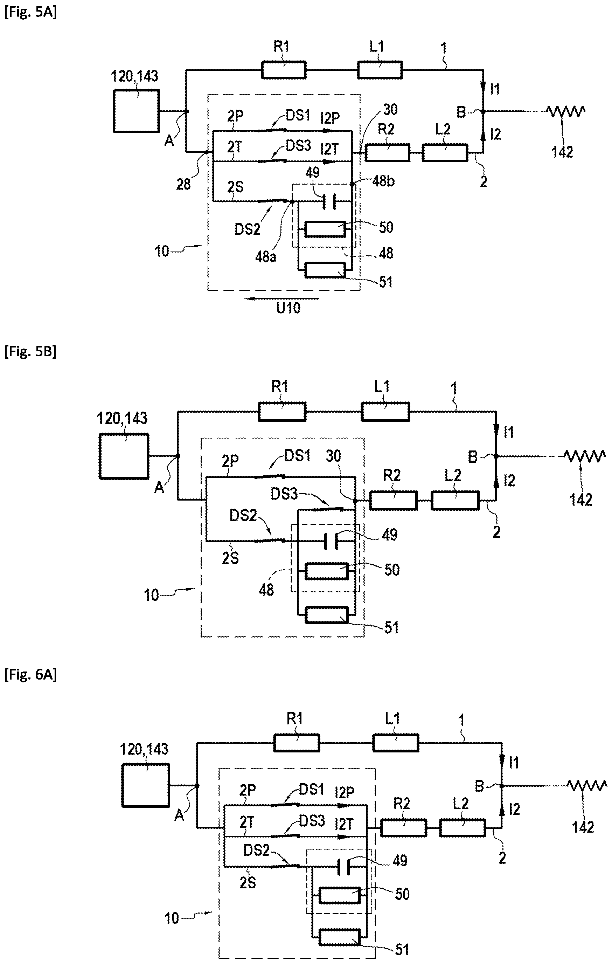

La **Fig. 5A** illustre, sous la forme d'un schéma électrique, une première architecture électrique d'un appareil de coupure mécanique **10** selon l'invention, inséré dans un circuit électrique **2,** au sein d'un réseau simplifié similaire à celui illustré à la **Fig. 2.** La **Fig. 5B** illustre une seconde architecture électrique, qui ne diffère de la première architecture électrique que par la disposition différente d'un commutateur commandé qui, dans un état électriquement fermé, crée à l'intérieur de l'appareil de coupure mécanique une dérivation qui court-circuite la capacité **49** d'un dipôle de transition **48,** tel que cela sera décrit plus bas. Pour le reste, les deux architectures électriques sont identiques.

Dans ces deux schémas, le couple de contacts principaux **21, 25** est représenté sous la forme d'un interrupteur **DS1** inséré dans le chemin électrique principal **2P** à l'intérieur de l'appareil de coupure mécanique **10.** Le couple de contacts secondaires **38, 39** est représenté sous la forme d'un interrupteur **DS2** inséré dans le chemin électrique secondaire **2S** à l'intérieur de l'appareil de coupure mécanique **10.** Comme représenté, le chemin électrique principal **2P** et le chemin électrique secondaire **2S** sont des chemins électriques parallèles entre les deux bornes **28, 30** de l'appareil de coupure mécanique **10.**

Dans l'invention, les mouvements relatifs du couple de contacts principaux **21, 25** et du couple de contacts secondaires **38, 39** sont coordonnés temporellement lors d'une opération d'ouverture ou de fermeture de l'appareil de coupure mécanique. Dans le mode de réalisation préféré, cette coordination temporelle est obtenue par une liaison mécanique par laquelle, pour chacune des deux électrodes **20, 22, 24,** le contact principal et le contact secondaire sont solidaires l'un de l'autre selon une géométrie dont on verra plus bas qu'elle peut prendre deux configurations, une première configuration étant mise en oeuvre lors des opérations et mouvements d'ouverture, et l'autre configuration étant mise en oeuvre lors des opérations et mouvements de fermeture. La coordination temporelle correspond ainsi, pour les opérations et mouvements d'ouverture, à un premier décalage temporel entre l'ouverture respective des deux couples de contacts, et, pour les opérations et mouvements de fermeture, à un second décalage temporel entre la fermeture respective des deux couples de contacts, le second décalage temporel étant de durée différente du premier décalage temporel, les décalages temporels résultant des différents écarts relatifs entre les contacts des deux couples.

Comme on peut le voir sur les **Figs. 5A** et **5B,** l'appareil de coupure mécanique **10** comporte un dipôle de transition **48** comprenant une capacité **49,** le dipôle de transition **48** étant agencé électriquement en série du couple de contacts électriques secondaires **38, 39** dans le chemin électrique secondaire **2S.** De plus l'appareil comporte un commutateur commandé **DS3** qui, dans un état électriquement fermé, crée à l'intérieur de l'appareil de coupure mécanique une dérivation qui court-circuite la capacité **49** du dipôle de transition **48.**

La capacité **49** du dipôle de transition **48** comporte au moins un composant capacitif dédié. Un composant capacitif dédié est typiquement un condensateur. Un condensateur comporte deux armatures conductrices (appelées parfois « électrodes ») en influence totale et séparées par un isolant. L'une des armatures conductrices du condensateur est donc reliée à la première borne **48a** du dipôle de transition **48** et l'autre des armatures conductrices du condensateur est donc reliée à la deuxième borne **48b** du dipôle de transition **48.** La capacité **49** du dipôle de transition **48** peut par exemple être réalisée sous la forme d'un ensemble de plusieurs composants capacitifs discrets agencés électriquement en série et / ou en parallèle et ayant une capacité électrique totale.

Le dipôle de transition **48** est agencé dans le chemin électrique secondaire **2S** soit en amont de l'interrupteur mécanique secondaire **DS2** comme illustré schématiquement aux **Figs. 4A-4C,** soit en aval de l'interrupteur mécanique secondaire **DS2** comme illustré aux **Figs. 5A** et **5B.**

Dans les exemples illustrés, le dipôle de transition **48** comporte un limiteur de tension **50** agencé électriquement en parallèle de la capacité **49** dans le dipôle de transition.

On pourrait envisager de ne pas avoir ce limiteur de tension, notamment pour le cas où la capacité peut supporter une tension importante. Cependant, la présence d'un limiteur de tension **50** agencé électriquement en parallèle de la capacité **49** dans le dipôle de transition permet de mettre en oeuvre une capacité ne devant supporter qu'une tension relativement réduite, par exemple du même ordre que, mais supérieure à, la chute de tension le long du circuit parallèle **1.** Ainsi, on pourra mettre en oeuvre une capacité dont la tension maximale est comprise entre 800 volts à 10.000 volts.

Dans le cas de la présence du limiteur de tension **50,** le dipôle de transition **48** comporte ainsi deux branches parallèles, insérées toutes les deux en parallèle électriquement l'une de l'autre entre une première borne **48a** et une seconde borne **48b** du dipôle de transition **48,** dans le chemin électrique secondaire **2S.** Dans une première branche se trouve la capacité **49.** Dans une seconde branche se trouve le limiteur de tension **50.**

Dans un premier exemple d'architecture électrique illustré à la **Fig. 5A,** un interrupteur commandé **DS3** faisant office de commutateur commandé est agencé électriquement en parallèle du chemin électrique secondaire **2S.** Dans cet exemple d'architecture électrique, l'interrupteur commandé **DS3** est donc aussi électriquement en parallèle du chemin électrique principal **2P.** L'interrupteur commandé **DS3** est alors interposé dans un chemin électrique tertiaire **2T** qui, dans l'exemple, relie directement les deux bornes **28, 30** de l'appareil de coupure mécanique **10,** et qui est donc en parallèle au chemin électrique principal et au chemin électrique secondaire. On remarque que, si le commutateur commandé **DS3** est dans un état électriquement fermé, il crée, à l'intérieur de l'appareil de coupure mécanique, une dérivation, qui est ici le chemin électrique tertiaire **2T** reliant directement les deux bornes **28, 30,** et qui court-circuite la capacité **49** du dipôle de transition **48,** en ce sens qu'un courant circulant dans l'appareil de coupure mécanique **10,** entre les deux bornes **28, 30,** ne passe pas par la capacité **49,** mais dans la dérivation, au travers du commutateur commandé **DS3.** Bien entendu, dans cette architecture, si le commutateur commandé **DS3** est dans un état électriquement fermé et que en même temps l'interrupteur mécanique secondaire **DS2** est aussi dans un état électriquement fermé, il est alors créé une boucle fermée qui relie les deux bornes de la capacité **49** et qui va provoquer la décharge de la capacité.

Dans le second exemple d'architecture électrique illustré à la **Fig. 5B,** un interrupteur commandé **DS3** faisant office de commutateur commandé est agencé électriquement directement en parallèle de la capacité **49,** donc directement en parallèle du dipôle de transition **48,** mais en étant inséré dans le chemin électrique secondaire **2S,** entre l'interrupteur mécanique secondaire et une borne de l'appareil de coupure mécanique. A la **Fig. 5B,** dans laquelle le dipôle de transition **48** est agencé dans le chemin électrique secondaire **2S** en aval de l'interrupteur mécanique secondaire **DS2,** l'interrupteur commandé **DS3** est donc interposé dans un chemin électrique qui relie directement un contact secondaire aval de l'interrupteur mécanique secondaire **DS2** à la borne aval **30** de l'appareil de coupure mécanique **10.**

Toutefois, dans une variante dans laquelle le dipôle de transition **48** serait agencé dans le chemin électrique secondaire **2S** en amont de l'interrupteur mécanique secondaire **DS2,** comme illustré aux **Figs. 4A-4C,** l'interrupteur commandé **DS3** serait donc interposé dans un chemin électrique reliant directement un contact secondaire amont de l'interrupteur mécanique secondaire **DS2** à la borne amont **30** de l'appareil de coupure mécanique **10.** Dans ce second exemple d'architecture électrique, si le commutateur commandé **DS3** est dans un état électriquement fermé, il crée, à l'intérieur de l'appareil de coupure mécanique, une dérivation, qui est ici constituée directement du commutateur commandé **DS3,** et qui court-circuite la capacité **49** du dipôle de transition **48,** en ce sens qu'un courant circulant dans l'appareil de coupure mécanique **10,** entre les deux bornes **28, 30,** ne passe pas par la capacité **49,** mais dans la dérivation, au travers du commutateur commandé **DS3.** Dans cette architecture, si le commutateur commandé **DS3** est dans un état électriquement fermé il est alors créé une boucle fermée qui relie les deux bornes capacité **49** et qui va provoquer la décharge de la capacité, quel que soit l'état de l'interrupteur mécanique secondaire **DS2.**

Dans les deux modes de réalisation, et que le dipôle de transition **48** soit agencé en amont ou en aval de l'interrupteur mécanique secondaire, lorsque l'interrupteur commandé **DS3** est dans un état fermé, il crée, à l'intérieur de l'appareil de coupure mécanique, une dérivation qui court-circuite la capacité **49** du dipôle de transition **48,** en ce sens qu'un courant circulant dans l'appareil de coupure mécanique **10,** entre les deux bornes **28, 30,** ne passe pas par la capacité **49.** On note de plus, que, dans l'architecture électrique de la **Fig. 5A,** et que le dipôle de transition **48** soit agencé en amont ou en aval de l'interrupteur mécanique secondaire **DS2,** lorsque l'interrupteur commandé **DS3** est dans un état fermé, il forme un court-circuit de l'ensemble du chemin électrique secondaire **2S** entre les deux bornes **28, 30** de l'appareil de coupure mécanique **10,** en court-circuitant aussi l'interrupteur mécanique secondaire **DS2,** en ce sens qu'un courant circulant dans l'appareil de coupure mécanique **10,** entre les deux bornes **28, 30,** ne passe pas non plus par l'interrupteur mécanique secondaire **DS2.**

Dans le mode de réalisation de la **Fig. 5B,** avec le commutateur commandé **DS3** inséré dans le chemin électrique secondaire **2S** entre l'interrupteur mécanique secondaire **DS2** et une borne de l'appareil de coupure mécanique **10,** on pourrait prévoir d'utiliser un interrupteur électronique en tant que commutateur commandé. Dans un tel cas, l'appareil de coupure mécanique **10** comportera généralement un circuit électronique de commande pour commander le commutateur **DS3.** On prévoira une alimentation électrique du circuit de commande et/ou du commutateur commandé électronique.

Cependant, dans les deux architectures électriques des **Figs. 5A et 5B,** et que le dipôle de transition **48** soit agencé en amont ou en aval de l'interrupteur mécanique secondaire **DS2,** on pourra avantageusement prévoir que le commutateur commandé **DS3** soit réalisé sous la forme d'un interrupteur mécanique. C'est ce qui est notamment représenté aux **Figs. 4A-4C,** où l'on voit que le commutateur commandé est un interrupteur mécanique tertiaire **DS3** ayant un couple de contacts tertiaires **60, 62** qui sont mobiles l'un par rapport à l'autre entre au moins une position ouverte correspondant à un état mécaniquement ouvert de l'interrupteur mécanique tertiaire **(Figs. 4A et 4C),** et au moins une position fermée correspondant à un état mécaniquement et électriquement fermé **(Figs. 4B)** de l'interrupteur mécanique tertiaire **DS3.** Vu les tensions en jeu aux bornes du couple de contacts tertiaires **60, 62,** la position ouverte correspond aussi à un état électriquement ouvert de l'interrupteur mécanique tertiaire.

Dans les deux architectures électriques des **Figs. 5A** et **5B,** et que le dipôle de transition **48** soit agencé en amont ou en aval de l'interrupteur mécanique secondaire **DS2,** le dipôle de transition **48** et le chemin électrique secondaire **2S** sont dépourvus de composant inductif dédié. Le chemin électrique secondaire **2S** peut présenter, comme tout circuit, une inductance parasite, résultant notamment de la nature même de composants électriques qu'il comprend, et résultant de la géométrie du circuit. Cependant, au sens de l'invention, ce chemin électrique secondaire **2S** et le dipôle de transition **48** ne comportent aucun composant inductif dédié, c'est-à-dire aucun composant discret ayant une fonction inductive recherchée, donc aucun composant ayant une inductance supérieure à une inductance parasite, notamment aucune bobine ou aucun noyau ferromagnétique inductif. Le dipôle de transition **48** présente ainsi une inductance équivalente très faible, par exemple inférieure à 50 microhenrys, de préférence inférieure à 10 microhenrys, plus préférentiellement inférieure à 1 microhenry.

Dans l'exemple de réalisation des **Figs. 4A-4C,** la première électrode **20** comporte un contact tertiaire **60** qui est destiné à être en contact avec l'organe de connexion mobile **24** lorsque l'appareil de coupure mécanique est dans un état de fermeture intermédiaire, par exemple celui illustré à la **Fig. 4C,** et, dans cet exemple, plus particulièrement avec un contact tertiaire **62** de l'organe de connexion mobile **24,** réalisé sous la forme d'un contact tubulaire. Au contraire, lorsque l'organe de connexion **24** a atteint une position d'ouverture, tel qu'illustré à la **Fig. 4A,** le contact électrique entre le contact tertiaire **62** de l'organe de connexion mobile **24** et le contact tertiaire **60** de la première électrode **20** est rompu.

Dans l'exemple, le contacteur tertiaire **60** de la première électrode **20** est fixe et s'étend selon une géométrie tubulaire d'axe **A1,** de manière à délimiter un alésage interne ouvert selon l'axe **A1.** Il peut être réalisé sous la forme de plusieurs lames de contact conductrices, qui s'étendent chacune dans un plan radial contenant l'axe **A1,** réparties autour de l'axe **A1** selon la géométrie tubulaire, et comportant toutes une extrémité libre de contact à une même distance radiale de l'axe **A1.** Dans l'exemple, le contacteur tertiaire **60** de la première électrode **20** s'étend coaxialement autour du contact secondaire **39** qui est porté par la même électrode **20.**

Le contact tertiaire **62** de la seconde électrode **22,** ici porté par l'organe de connexion mobile **24** et relié électriquement de manière permanente à l'organe de connexion mobile, est configuré, pour toutes les positions de la plage de positions intermédiaires relatives des électrodes pour laquelle le chemin électrique tertiaire est fermé, pour être engagé dans l'alésage interne du contact **60** de la première électrode **20,** en assurant un contact électrique entre les deux contacts tertiaires **60, 62.** Une de ces positions est illustrée à la **Fig. 4B.** Dans l'exemple, le contact tertiaire **62** de la seconde électrode est réalisé sous la forme d'un tube d'axe **A1** porté à l'extrémité libre de l'organe mobile **24.** Ce tube s'étend coaxialement autour de la tige de contact qui forme le contact secondaire **38.** En position électriquement fermée de l'interrupteur mécanique tertiaire **DS3,** l'extrémité libre de contact de chacune des lames de contact conductrices formant le contact tertiaire **60** est en appui sur une surface externe du contact tertiaire **62** en forme de tube. Au contraire, au-delà de la position d'ouverture électrique de l'interrupteur mécanique tertiaire **DS3,** le contact entre les deux contacts tertiaires **60, 62** est perdu. L'organe de connexion mobile **24** forme donc, avec le corps de la première électrode, au niveau du couple de contacts tertiaires **60, 62,** un interrupteur mécanique tertiaire **DS3.**

Lorsque l'appareil de coupure mécanique **10** comporte un commutateur commandé **DS3** qui, dans un état électriquement fermé, crée à l'intérieur de l'appareil de coupure mécanique une dérivation qui court-circuite la capacité **49,** et qui est réalisé sous la forme d'un interrupteur mécanique tertiaire, l'appareil comporte aussi une commande mécanique de l'interrupteur mécanique tertiaire **DS3** qui assure le déplacement relatif des contacts tertiaires entre les positions ouvertes et fermées de l'interrupteur mécanique tertiaire **DS3.** Dans l'exemple des **Figs. 4A-4C** chacune des deux électrodes **20, 22** porte un des contacts tertiaires **60, 62,** de sorte que la commande mécanique de l'interrupteur mécanique tertiaire **DS3** est en fait la même que la commande mécanique de l'interrupteur mécanique principal **DS1,** à savoir celle qui assure le déplacement de l'organe mobile **24** par rapport à la première électrode **20.**

Pour le cas où l'appareil de coupure mécanique comporte un commutateur commandé qui, dans un état électriquement fermé, crée à l'intérieur de l'appareil de coupure mécanique une dérivation qui court-circuite la capacité **49,** et qui est réalisé sous forme d'un interrupteur tertiaire électronique, la commande de l'interrupteur tertiaire est une commande électronique, qui met généralement en oeuvre une unité de contrôle électronique.

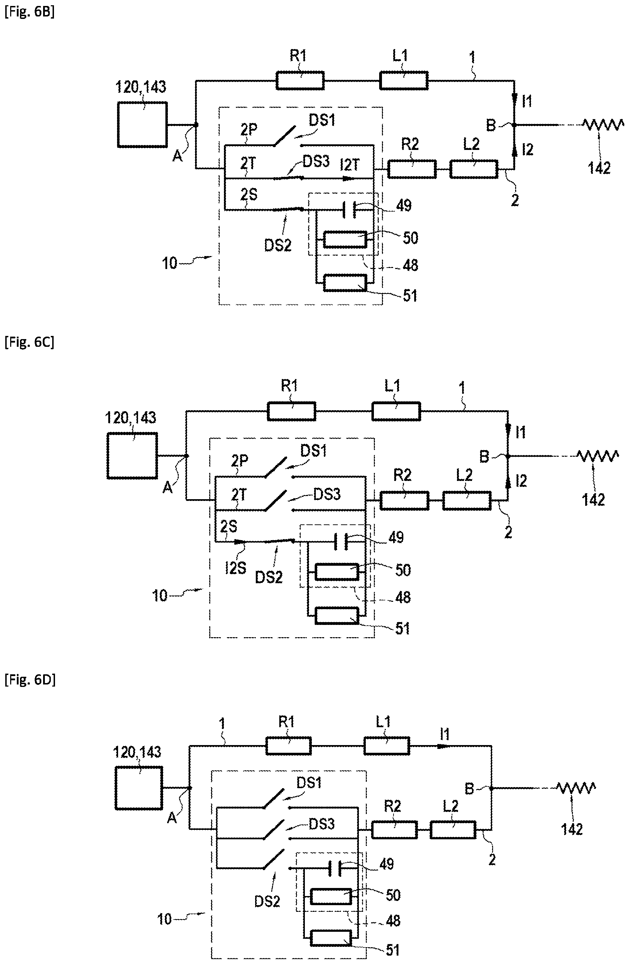

Avantageusement, comme on le verra plus loin, l'appareil de coupure mécanique est configuré de telle sorte que, dans une opération d'ouverture de l'appareil de coupure mécanique **10,** le commutateur commandé **DS3** est amené dans un état électriquement ouvert après que l'interrupteur mécanique principal **DS1** a été amené dans son état mécaniquement ouvert, mais avant que l'interrupteur mécanique secondaire **DS2** soit amené dans son état mécaniquement ouvert, ce qui est illustré par l'enchaînement des **Figs. 6A-6D,** et aussi par l'enchaînement des **Figs. 13A-13D.** Dans les modes de réalisation où le commutateur commandé **DS3,** qui crée à l'intérieur de l'appareil de coupure mécanique une dérivation qui court-circuite la capacité **49,** est réalisé sous forme d'un interrupteur mécanique tertiaire, la commande des interrupteurs mécaniques principal **DS1,** secondaire **DS2** et tertiaire **DS3** est donc avantageusement configurée de telle sorte que, dans une opération d'ouverture de l'appareil de coupure mécanique **10,** l'interrupteur mécanique tertiaire **DS3** est amené dans son état ouvert après que l'interrupteur mécanique principal **DS1** a été amené dans son état mécaniquement ouvert et avant que l'interrupteur mécanique secondaire **DS2** soit amené dans son état mécaniquement ouvert.

On verra que ce séquencement permet de s'assurer de l'ouverture électrique de l'appareil de coupure mécanique en minimisant l'apparition d'arc électrique et en assurant que l'arc électrique soit éteint lorsqu'on atteint l'état mécaniquement ouvert de l'appareil de coupure mécanique, pour assurer l'ouverture électrique du circuit.

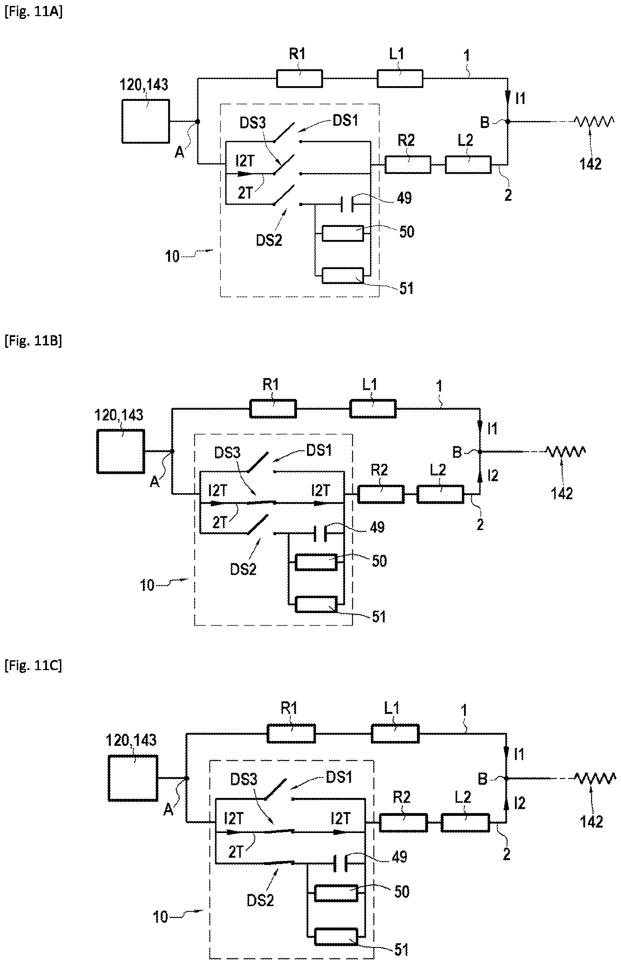

D'autre part, l'appareil de coupure mécanique **10** est configuré de telle sorte que, dans une opération de fermeture de l'appareil de coupure mécanique **10,** l'interrupteur mécanique principal **DS1** et l'interrupteur mécanique secondaire **DS2** sont amenés dans leur état mécaniquement fermé après que le commutateur commandé **DS3** a été amené dans son état électriquement fermé, ce qui est illustré par l'enchainement des **Figs. 11A-11 D,** et aussi par l'enchaînement des **Figs. 14A-14D.** Dans les modes de réalisation où le commutateur commandé **DS3,** qui crée à l'intérieur de l'appareil de coupure mécanique une dérivation qui court-circuite la capacité **49,** est réalisé sous forme d'un interrupteur mécanique tertiaire, la commande des interrupteurs mécaniques principal **DS1,** secondaire **DS2** et tertiaire **DS3** est donc avantageusement configurée de telle sorte que, dans une opération de fermeture de l'appareil de coupure mécanique **10,** l'interrupteur mécanique principal **DS1** et l'interrupteur mécanique secondaire **DS2** sont amenés dans leur état mécaniquement et électriquement fermé après que l'interrupteur mécanique tertiaire **DS3** a été amené dans son état mécaniquement et électriquement fermé.

On pourrait prévoir que chacun de l'interrupteur mécanique principal **DS1,** de l'interrupteur mécanique secondaire **DS2** et du commutateur commandé **DS3,** soit pourvu de sa propre commande indépendante pour passer de son état mécaniquement ouvert à son état mécaniquement et électriquement fermé, et inversement, de manière indépendante. On peut alors actionner les commandes selon une séquence pour obtenir le séquencement souhaité. On pourrait aussi prévoir que, parmi l'interrupteur mécanique principal **DS1,** l'interrupteur mécanique secondaire **DS2** et le commutateur commandé **DS3,** deux d'entre eux soient pourvus d'une commande commune, et que le dernier soit pourvu d'une commande indépendante.

Cependant, il est avantageux de prévoir une seule commande pour, à la fois, l'interrupteur mécanique principal **DS1,** l'interrupteur mécanique secondaire **DS2** et le commutateur commandé **DS3**. Dans ce cas-là, le passage de l'appareil de coupure mécanique de la configuration d'ouverture à la configuration de fermeture, et inversement, est avantageusement contrôlé par un mécanisme passif ne nécessitant pas une commande indépendante.

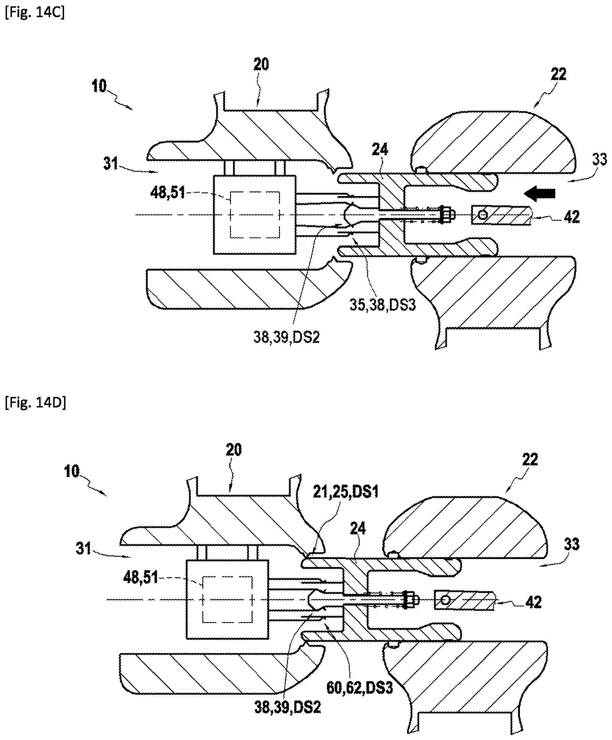

Dans l'architecture mécanique illustrée aux **Figs. 4A-4C**, 13A-13D, 14A-14D, cette double propriété peut être mise en oeuvre de la manière suivante. On remarque que, sur chacune des deux électrodes **20, 22**, plus précisément sur la première électrode **20** et sur l'organe mobile **24** pour ce qui est du mode de réalisation représenté, le contact principal et le contact tertiaire d'une même électrode présentent une position fixe sur l'électrode considérée. De plus, pour une position relative donnée des deux électrodes dans leur mouvement d'ouverture ou de fermeture, le couple de contact principaux et le couple de contacts tertiaires présentent un écartement relatif entre les contacts du couple, respectivement « **e1** » et « **e3** », qui est différent, ce qui est illustré à la **Fig. 4A**. Ceci est apparent dans une position où les deux interrupteurs mécaniques, principal **DS1** et tertiaire **DS3,** sont dans un état mécaniquement ouvert. On voit que l'écartement relatif « **e1** » entre les contacts principaux **21, 25** qui forment l'interrupteur mécanique principal **DS1,** est supérieur à l'écartement relatif « **e3** » entre les contacts tertiaires **60, 62** qui forment l'interrupteur mécanique tertiaire **DS3**. Ainsi, pour une position intermédiaire ou une plage de positions intermédiaires des électrodes entre la position d'ouverture électrique et la position de fermeture électrique complète, le chemin électrique principal **2P** est interrompu au niveau du couple de contacts principaux **21, 25** tandis qu'un chemin électrique est fermé au niveau du couple de contacts tertiaires **60, 62**, permettant donc le passage d'un courant électrique, ce qui est illustré plus particulièrement à la **Fig. 13B** pour un mouvement d'ouverture et à la **Fig. 14C** pour le mouvement de fermeture. Dans une telle position, l'interrupteur mécanique tertiaire **DS3** crée, à l'intérieur de l'appareil de coupure mécanique, une dérivation qui court-circuite la capacité **49** du dipôle de transition **48**.

En revanche, dans l'exemple illustré, l'un au moins des contacts du couple de contacts secondaires **38, 39** est mobile sur l'électrode **20, 22, 24** qui le porte, entre une configuration d'ouverture adoptée lors du mouvement d'ouverture et une configuration de fermeture adoptée lors du mouvement de fermeture des électrodes, dans une opération de fermeture de l'appareil de coupure mécanique **10**. Ces configurations d'ouverture et de fermeture correspondent à un écartement relatif « e2 » différent entre les deux contacts du couple de contacts secondaires **38, 39** pour une même position relative donnée des deux électrodes, de telle sorte que :

- lors du mouvement d'ouverture, le couple de contacts secondaires se sépare après les couples de contacts principaux et tertiaires ;
- lors du mouvement de fermeture, le couple de contacts secondaires entre en contact après le couple de contacts tertiaires.

De préférence, lors du mouvement de fermeture, le couple de contacts principaux et le couple de contacts secondaires entrent en contact après le couple de contacts tertiaires.

En pratique, dans le mode de réalisation illustré, le contact secondaire **38** de la seconde électrode **22** est mobile sur l'électrode qui le porte, en l'occurrence mobile sur l'organe de connexion mobile **24,** entre deux positions distinctes selon l'axe **A1** par rapport à l'organe de connexion mobile **24** qui le porte, une position correspondant à la configuration d'ouverture et l'autre à la configuration de fermeture. Dans la position de configuration de fermeture, le contact secondaire **38** est reculé selon l'axe **A1** par rapport à l'organe de connexion mobile **24** pour accroitre son écartement « e2 » par rapport au contact secondaire **39** porté par l'autre électrode **20**. Dans la position de configuration d'ouverture, le contact secondaire **38** est avancé selon l'axe **A1** par rapport à l'organe de connexion mobile **24** pour réduire son écartement par rapport au contact secondaire **39** porté par l'autre électrode. On pourrait prévoir que ce soit le contact secondaire **39** de la première électrode **20** qui soit mobile sur l'électrode qui le porte, ou encore que les deux contacts secondaires **38, 39** de la première et de la deuxième électrode **20** soient tous les deux mobiles chacun sur l'électrode qui le porte. Dans l'exemple, la tige de contact **38** qui forme le contact secondaire est donc montée mobile en translation selon l'axe **A1** sur l'organe mobile de connexion **24**. Elle est par exemple guidée en translation selon l'axe **A1** dans un alésage de l'organe mobile de connexion **24**.

Dans l'exemple, le passage du contact secondaire de la configuration d'ouverture est commandé passivement. En effet, dans l'exemple, le contact secondaire **38** est rappelé élastiquement dans celle de ses positions qui correspond à l'une des configurations d'ouverture ou de fermeture. Dans l'exemple, le contact secondaire **38** est rappelé élastiquement dans sa position qui correspond à la configuration de fermeture. Le rappel élastique est par exemple assuré par un ressort de rappel **64**.

Dans l'exemple, c'est par coopération mécanique avec un organe de l'appareil de coupure mécanique, ici avec l'autre contact secondaire **39,** que le contact secondaire **38** est amené dans son autre position correspondant à l'autre des configurations ouverte ou fermée. Dans l'exemple, on a vu que le contact secondaire **38** est engagé dans l'alésage interne du contacteur **39** de la première électrode **20,** pour assurer un contact électrique entre les deux contacts secondaires. Dans l'exemple, le contact secondaire **38** et le contacteur **39** de la première électrode **20,** sont pourvus de formes complémentaires qui créent un premier pic de résistance mécanique qui empêche la perte de contact entre les deux en dessous d'un effort de seuil dans le sens de l'ouverture. Ce premier pic de résistance mécanique est supérieur à la force de rappel élastique, exercée dans l'exemple par le ressort de rappel **64,** de sorte que, avant de permettre l'ouverture de l'interrupteur mécanique secondaire **DS2,** le mouvement d'écartement des électrodes, dans le sens de l'ouverture, entraîne le passage du contact secondaire **38** de sa configuration de fermeture à sa configuration d'ouverture. En d'autres termes, à partir d'une certaine position, le mouvement des électrodes provoque le déplacement du contact secondaire par rapport à l'organe de connexion mobile **24** qui le porte, de la configuration de fermeture jusqu'à la configuration d'ouverture. Lorsque le contact secondaire **38** atteint sa configuration d'ouverture, il arrive en butée dans son mouvement relatif par rapport à l'électrode qui le porte. On note que, pour cette position illustrée à la **Fig. 4C** et à la **Fig. 13C,** l'interrupteur tertiaire **DS3** est déjà dans un état mécaniquement ouvert. Cette butée fait que l'effort de séparation, exercé sur le contact secondaire **38** par l'organe de connexion mobile **24** qui le porte, excède le premier pic de résistance mécanique et provoque la séparation des deux contacts **38, 39.** Dans l'exemple, dès que la séparation des deux contacts secondaire **38, 39** est acquise, le rappel élastique ramène le contact secondaire **38** dans sa position qui correspond à la configuration de fermeture.

D'autres mécanismes pourraient être prévus pour permettre le passage de l'appareil de coupure mécanique **10** de sa configuration d'ouverture à sa configuration de fermeture, y compris des mécanismes comprenant un actionneur spécifique au changement de configuration. On note de plus que, dans l'exemple, le système est monostable, avec une seule configuration stable qui est la configuration de fermeture. On pourrait cependant prévoir un système bistable, avec un système qui est forcé élastiquement soit dans la configuration d'ouverture soit dans la configuration de fermeture, et un dispositif de commande qui bascule le système de l'un à l'autre, par exemple en fonction du sens de mouvement des électrodes.

Dans l'invention, le limiteur de tension peut être ou peut comprendre un parasurtenseur **50,** ou « voltage surge arester », et est un dispositif qui limite les crêtes de tension à ses bornes, et donc notamment qui limite les crêtes de tension aux bornes de la capacité **49.** Le limiteur de tension peut être réalisé sous la forme d'un ensemble de plusieurs composants discrets agencés électriquement en série et / ou en parallèle. De préférence, l'ensemble de plusieurs composants discrets agencés électriquement en série et / ou en parallèle présente, du point de vue du reste du dispositif le comportement d'un parasurtenseur unique ayant une tension de transition équivalente pour l'ensemble et une tension de protection pour l'ensemble. Un parasurtenseur comprend généralement un composant électrique qui présente une résistance variable en fonction de la tension électrique à ses bornes. La variation de la valeur de résistance n'est généralement pas linéaire avec la tension électrique aux bornes du parasurtenseur. Généralement, en-dessous d'une tension de transition aux bornes du parasurtenseur, la résistance de celui-ci est importante, avec une décroissance nulle ou relativement faible de sa résistance en fonction de l'augmentation de la tension, et le parasurtenseur ne laisse passer qu'un courant de fuite, de préférence inférieur à 1 ampère (A), voire inférieur à 100 milliampères (mA), voire inférieur ou égal à 1 milliampère (mA). Au contraire, au-dessus de la tension de transition aux bornes du parasurtenseur, la résistance de celui-ci décroît rapidement en fonction de l'augmentation de la tension, laquelle atteint une valeur de tension d'écrêtage, ou tension de protection, pour laquelle la résistance du parasurtenseur devient faible, voire très faible. En d'autres termes, le parasurtenseur agit comme un limiteur de tension à ses bornes sur l'intervalle de courant pour lequel il a été choisi. Il oppose la tension de protection lorsqu'on fait passer le courant le plus élevé pour lequel le parasurtenseur a été dimensionné. En deçà de la tension de transition, il tend à empêcher le passage du courant. Au-delà de la tension de transition, il autorise le passage du courant au travers du parasurtenseur pour une faible augmentation de la tension à ses bornes. De manière connue, la tension de transition n'est généralement pas une valeur précise mais correspond plutôt à une plage de tension de transition. Cependant, dans le présent texte, on prendra comme définition que la tension de transition d'un parasurtenseur est la tension pour laquelle le parasurtenseur laisse passer à son travers un courant de 1 ampère (A). La tension de protection est la tension aux bornes du parasurtenseur lorsqu'il est traversé par le courant le plus important pour lequel il a été dimensionné. Parmi les parasurtenseurs, on connaît notamment les parafoudres, lesquels peuvent notamment comprendre les varistances (ou varistors) et les diodes « TVS » (Transient Voltage Suppressor), telles que les diodes « Transil™ ». Notamment, dans le cadre de l'invention, un parasurtenseur, peut comprendre un varistor à oxydes métalliques (ou MOV, signifiant « metal oxyde varistor »). Le limiteur de tension peut être ou peut comprendre un éclateur.

Dans les exemples illustrés, il est prévu un circuit de décharge de la capacité **49** du dipôle de transition **48.** Dans les exemples illustrés, le circuit de décharge est un circuit de décharge passif, ne comportant pas de composant actif. Dans cet exemple, le circuit de décharge comporte une résistance **51** qui est agencée électriquement en parallèle du dipôle de transition **48,** donc en parallèle de la capacité **49** du dipôle de transition **48,** et donc en parallèle du limiteur de tension **50** du dipôle de transition **48.** De préférence, la résistance **51** présente une valeur de résistance électrique R51 élevée, par exemple comprise entre 10 ohms et 1000 ohms, plus particulièrement entre 50 ohms et 300 ohms, de telle sorte que le dipôle, qui est constitué de la capacité **49** du dipôle de transition **48** et de la résistance **51** agencés en parallèle, présente une constante de temps importante par rapport à un délai de coupure électrique dans l'interrupteur mécanique secondaire **DS2,** par exemple une constante de temps supérieure à 100 millisecondes (ms), de préférence supérieure à 500 millisecondes (ms). Inversement, cette constante de temps doit être suffisamment réduite pour que la capacité 49 soit déchargée en un temps relativement court, ceci afin que le système soit en mesure d'être à nouveau opérationnel après une première mise en oeuvre. De ce fait, en prévoira avantageusement que la constante de temps soit inférieure à 3 secondes, de préférence inférieure ou égale à 1 seconde. Dans cet exemple la constante de temps peut être considérée comme étant égale au produit R51 × C49. Un autre type de circuit de décharge, non illustré dans les dessins, pourrait comporter un interrupteur commandé. Ainsi, un circuit de décharge pourrait comprendre un interrupteur commandé qui serait agencé directement en série électriquement avec la résistance **51**, l'ensemble de ces deux composants étant en parallèle du dipôle de transition **48.** Lorsque l'interrupteur commandé serait basculé dans un état fermé laissant passer le courant, il se formerait un circuit de décharge entre les deux armatures de la capacité **49** du dipôle de transition **48.** De préférence, l'interrupteur commandé serait un interrupteur mécanique qui serait analogue à l'interrupteur mécanique principal **DS1** et à l'interrupteur mécanique secondaire **DS2,** c'est-à-dire comprenant un couple de contacts dont l'un serait porté par une des électrodes et l'autre par l'autre des électrodes de manière à s'ouvrir et se fermer électriquement de manière coordonnée temporellement avec celle de l'interrupteur mécanique principal **DS1** et à l'interrupteur mécanique secondaire **DS2** notamment. On peut considérer que le circuit de décharge de la capacité **49** du dipôle de transition **48** est intégré au dipôle de transition **48,** en formant une troisième branche parallèle de ce dipôle de transition **48.**

Dans les exemples illustrés, on voit que chaque électrode **20, 22** présente une surface périphérique externe conductrice **32, 34** ayant une géométrie essentiellement convexe et dépourvue de parties saillantes, et, à l'intérieur de l'enveloppe définie par sa surface périphérique externe conductrice **32, 34,** chaque électrode **20, 22** présente une cavité interne **31, 33.** Le dipôle de transition électrique **48** peut avantageusement être logé à l'intérieur de l'enveloppe déterminée par la surface périphérique conductrice **32, 34** d'une des deux électrodes **20, 22,** de préférence en étant entièrement reçu à l'intérieur de ladite cavité interne **31, 33.** Cependant, on pourrait aussi prévoir que tout ou partie du dipôle de transition électrique **48,** soit agencé à l'extérieur de l'enveloppe définie par la surface périphérique externe conductrice **32, 34** de l'électrode **20, 22,** tout en restant de préférence agencé à l'intérieur du volume interne **16** de l'appareil de coupure mécanique.

Dans tous les cas, lorsque le commutateur commandé **DS3** est réalisé sous la forme d'un interrupteur mécanique, on obtient un appareil de coupure mécanique dont l'état électriquement ouvert peut être constaté de visu, en visualisant la séparation des contacts tertiaires, en plus de la séparation des contacts principaux et secondaires.

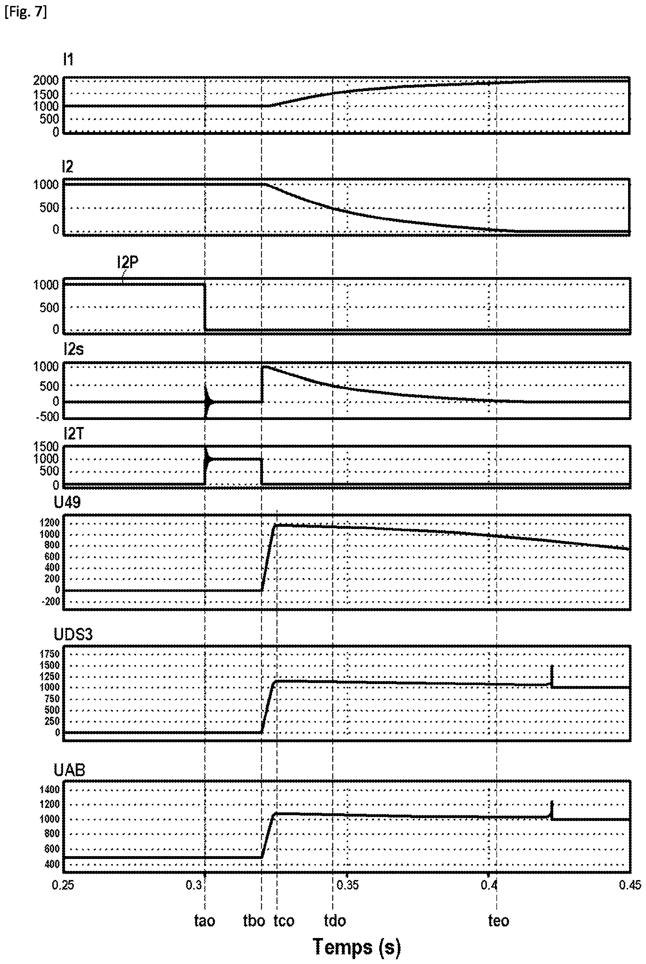

On décrira maintenant, en références aux **Figs 6A** à **6D,** aux **Figs. 7** à **10,** et aux **Figs. 13A-13D** le fonctionnement d'un mode de réalisation d'un appareil de coupure mécanique **10** selon l'invention en décrivant les principales étapes d'une opération d'ouverture d'un tel appareil de coupure mécanique. Plus particulièrement, on considérera ici le cas d'un appareil de coupure mécanique ayant l'architecture électrique illustrée à la **Fig. 5A.** Cependant, ce qui est décrit ci-dessous concernant l'opération d'ouverture d'un appareil de coupure mécanique est tout aussi valable pour le cas d'un appareil de coupure mécanique ayant l'architecture électrique illustrée à la **Fig. 5B.** Dans la description ci-dessous on considère que l'appareil de coupure mécanique **10** est, comme illustré à la **Fig. 2,** intégré dans un second circuit électrique **2** agencé en parallèle d'un premier circuit électrique **1.** Les deux circuits électriques **1, 2** peuvent avoir à titre d'exemple la même résistance électrique équivalente, respectivement **R1** et **R2,** et la même inductance électrique équivalente **L1** et **L2** respectivement, mais cela n'est qu'un cas particulier.

Sur la **Fig. 7** on a illustré, pour le passage de l'appareil de coupure mécanique d'un état fermé électriquement, à un état électriquement ouvert, les variations dans le temps de :

- l'intensité **I1** dans le premier circuit électrique **1** ;
- l'intensité **I2** dans le second circuit électrique **2** ;
- l'intensité **I2P** du courant électrique dans le chemin électrique principal **2P,** donc au travers de l'interrupteur mécanique principal **DS1** ;
- l'intensité **I2S** du courant électrique dans le chemin électrique secondaire **2S,** donc au travers de l'interrupteur mécanique secondaire **DS2** ;
- l'intensité **I2T** du courant électrique au travers de l'interrupteur mécanique tertiaire **DS3** ;
- la tension **U49** aux bornes de la capacité **49** ;
- la tension **UDS3** aux bornes du commutateur commandé **DS3** ;
- la tension **UAB** entre les points de jonction **A** et **B** des deux circuits parallèles **1** et **2.**

Les valeurs indiquées correspondent à la situation suivante :

- Source de courant délivrant un courant nominal de 2000 A ;
- Tension aux bornes de l'appareil de coupure mécanique **10** ouvert : 1000 V, correspondant à la tension **UAB** aux bornes des deux circuits parallèles **1** et **2** lorsque le circuit **1** est fermé et parcouru par le courant nominal, donc correspondant à la chute de tension dans le circuit parallèle **1** sous ce courant nominal ;
- valeur de capacité C49 de la capacité **49** : 4 milli-farad ;

- valeur de résistance R51 de la résistance de décharge **51** : 50 ohm.

Dans un état initial, on considère que tous les appareils de coupure mécanique **10** dans les deux circuits **1, 2** sont dans un état de fermeture électrique complète, laissant passer dans chaque circuit un courant respectivement **I1** et **I2**. Dans le cas envisagé ci-dessus dans lequel les deux circuits présentent la même résistance équivalente et la même inductance équivalente, les valeurs initiales des courants **I1** et **I2** sont égales, par exemple égales à 1000 A.

Dans cet état initial, on considère que l'intégralité du courant **I2** traversant l'appareil de coupure mécanique **10** circule selon le chemin électrique principal **2P**, lequel voit donc un courant électrique **I2P** égal au courant électrique **I2** circulant dans le second circuit électrique **2**. Pour cela on néglige le courant qui est susceptible de circuler, dans ce mode de réalisation, dans le chemin électrique tertiaire **2T** qui peut présenter des résistances et inductances parasites. Par ailleurs, le chemin électrique secondaire **2S** comporte, en série, le dipôle de transition **48** qui fait que l'impédance du chemin électrique secondaire **2S** est supérieure, de plusieurs ordres de grandeur, à celle du chemin électrique principal **2P**, si bien qu'on peut considérer qu'aucun courant ne passe dans le chemin électrique secondaire **2S**. Cet état initial est représenté sur les **Figs. 6A et 13A**

L'opération d'ouverture de l'appareil de coupure mécanique **10** commence par une étape d'ouverture du chemin électrique principal **2P** au sein de l'appareil de coupure mécanique **10,** par écartement des contacts principaux **21, 25.** de l'interrupteur mécanique principal **DS1**. Cette étape commence à un instant « **tao** » illustré à la **Fig. 7**. L'interrupteur mécanique secondaire **DS2** et le commutateur commandé qui est ici réalisé sous la forme de l'interrupteur tertiaire **DS3** restent tous les deux électriquement fermés.

Dans le cas d'un appareil de coupure mécanique tel que montré aux **Figs. 4A-4C,** cela correspond à une commande de l'organe mobile **24** selon son mouvement d'ouverture depuis sa position de fermeture électrique complète, en direction de sa position d'ouverture électrique. L'instant « **tao** » correspond au moment de dernier contact des contacts principaux **21, 25.** Juste après l'instant « **tao** », on se trouve donc dans l'état illustré sur les **Figs. 6B** et **13B.** De ce fait, le courant électrique au travers de l'appareil de coupure mécanique **10** bascule quasi instantanément du chemin électrique principal **2P** vers le chemin électrique tertiaire **2T.**

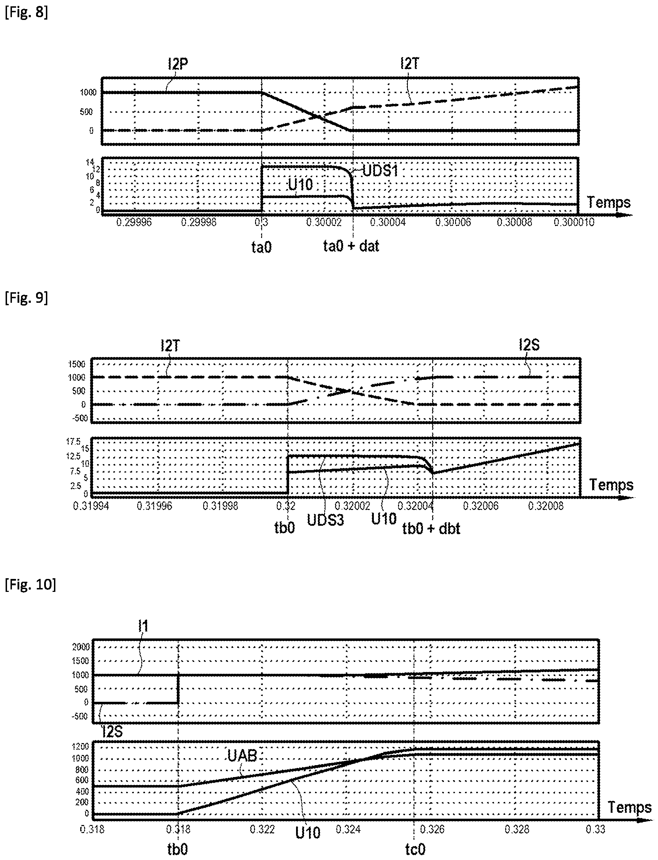

Ce basculement est illustré sur la **Fig. 7,** et sur la **Fig. 8** qui représente, avec une échelle de temps dilatée par rapport à la **Fig. 7,** la variation d'une part des courants **I2P** et **I2T** dans le chemin électrique principal **2P** et dans le chemin électrique tertiaire **2T,** et d'autre part la tension **UDS1** aux bornes de l'interrupteur mécanique principal **DS1**. Le chemin électrique tertiaire **2T** dans lequel se situe l'interrupteur mécanique tertiaire **DS3** présente une impédance plus faible par rapport à celle du chemin électrique secondaire **2S**. On note que l'intensité **I2P** du courant au travers de l'interrupteur mécanique principal **DS1** chute de manière extrêmement rapide à une valeur nulle, en une durée de basculement « **dat** » extrêmement faible, par exemple de moins d'un dixième de milliseconde dans l'exemple illustré, ce qui ressort notamment de la **FIG. 8**. On note sur cette **Fig. 8** l'apparition d'un pic de la tension **UDS1** aux bornes de l'interrupteur mécanique principal **DS1** qui est extrêmement limité en valeur, car de l'ordre de la dizaine de Volt, et qui est extrêmement faible en durée puisque sa durée correspond à la durée de basculement « **dat** ». Si un arc électrique s'installe entre les contacts principaux **21, 25** de l'interrupteur mécanique principal **DS1,** sa tension d'arc et sa durée seront donc extrêmement faible, entrainant une usure minimale des contacts principaux **21, 25.** Sur la **Fig. 8,** on note que, durant cette très faible durée de basculement « **dat** », la tension **UDS1** aux bornes de l'interrupteur mécanique principal **DS1** devient supérieure à la tension **U10** aux bornes l'appareil de coupure mécanique **10,** ce qui permet la commutation du courant du chemin électrique principal **2P** vers le chemin électrique tertiaire **2T**. On note encore que l'intensité du courant dans le chemin électrique secondaire et l'intensité du courant dans le chemin électrique tertiaire peuvent présenter un phénomène oscillatoire, qui peut s'expliquer par la présence d'inductances parasites, mais dont l'amplitude ne modifie pas le fonctionnement du système et qui s'estompe dans une durée de stabilisation de l'ordre de la milliseconde. Au-delà de cette durée de stabilisation, on peut considérer que l'intégralité du courant au travers de l'appareil de coupure mécanique **10** circule dans le chemine électrique tertiaire **2T,** donc au travers du commutateur commandé qui est ici réalisé sous la forme de l'interrupteur tertiaire **DS3**.

A un instant « **tbo** » suivant l'instant « **tao** », l'opération d'ouverture de l'appareil de coupure mécanique **10** se poursuit par l'ouverture du commutateur commandé qui est ici réalisé sous la forme de l'interrupteur tertiaire **DS3.** L'interrupteur mécanique principal **DS1** reste électriquement ouvert, et l'interrupteur mécanique secondaire **DS2** reste électriquement fermé. Dans le cas d'un appareil de coupure mécanique tel que montré aux **Figs. 4A-4C,** cela correspond à une poursuite de la commande de l'organe mobile **24** selon son mouvement d'ouverture en direction de sa position d'ouverture électrique. L'instant « **tbo** » correspond au moment de dernier contact des contacts tertiaires **60, 62.** Juste après l'instant « **tbo** », on se trouve donc dans l'état illustré sur les **Figs. 4C, 6C** et **13C.** De ce fait, le courant électrique au travers de l'appareil de coupure mécanique **10** bascule quasi instantanément du chemin électrique tertiaire **2T** vers le chemin électrique secondaire **2S.** Ce basculement est illustré plus particulièrement sur la **Fig. 9** qui représente, avec une échelle de temps dilatée par rapport à la **Fig. 7,** la variation d'une part des courants **I2T** et **I2S** dans le chemin électrique tertiaire **2T** et dans le chemin secondaire **2S,** et d'autre part la tension **UDS3** aux bornes de l'interrupteur tertiaire **DS3**. On note que l'intensité **I2T** du courant au travers de l'interrupteur tertiaire **DS3** chute de manière extrêmement rapide à une valeur nulle, en une durée de basculement « **dbt** » extrêmement faible, par exemple de moins d'un dixième de milliseconde dans l'exemple illustré, ce qui ressort notamment de la **FIG. 9.** La durée de basculement « **dbt** » est déterminée notamment par la valeur de la capacité et la valeur d'éventuelles inductances parasites. On note sur cette **Fig. 9** l'apparition d'un pic de la tension UDS3 aux bornes de l'interrupteur tertiaire **DS3** qui est extrêmement limité en valeur, car de l'ordre de la dizaine de Volts, et qui est extrêmement faible en durée puisque sa durée correspond à la durée de basculement « **dbt** ». Si un arc électrique s'installe entre les contacts tertiaires, sa tension d'arc et sa durée seront donc extrêmement faible, entrainant une usure minimale des contacts tertiaires. Sur la **Fig. 9,** on note que, durant cette très faible durée de basculement « **dbt** », la tension UDS3 aux bornes de l'interrupteur tertiaire **DS3** devient supérieure à la tension **U10** aux bornes l'appareil de coupure mécanique **10,** ce qui permet la commutation du courant du chemin électrique tertiaire **2T** vers le chemin électrique secondaire **2S.** En basculant dans le chemin électrique secondaire, le courant électrique va donc alimenter le dipôle de transition **48.** On notera que, en présence d'un circuit de décharge **51,** la capacité **49** aura de préférence été déchargée avant le début de l'opération d'ouverture, en tous cas de préférence déchargée avant l'instant d'ouverture du commutateur commandé **DS3.** Au fur et à mesure que la capacité **49** se charge, la tension **U49** à ses bornes augmente. Cette tension est appliquée aux bornes de **DS3** (en négligeant les chutes de tensions dans les éléments parasites). Une capacité **49** de plus grande valeur conduit à une augmentation plus lente de la tension aux bornes du commutateur commandé **DS3** et donc à des contraintes de tension moins importantes sur le commutateur commandé **DS3** et sur l'interrupteur mécanique principal **DS1.** En effet, avec une capacité de plus grande valeur, la constante de temps caractéristique du circuit de charge, constitué par le chemin électrique secondaire **2S** et le chemin électrique tertiaire **2T,** augmente, ce qui conduit à une durée de charge plus importante et donc une montée en tension au niveau du commutateur commandé **DS3** plus lente. Par conséquent, pour une même distance de séparation des contacts tertiaires formant le commutateur commandé **DS3,** ces derniers seront soumis à une contrainte en tension moins importante.

Quand la tension **U49** aux bornes de la capacité **49** dépasse la valeur de tension de transition du limiteur de tension **50,** ce qui correspond sensiblement à l'instant noté « **tco** » sur la **Fig. 7,** la résistance électrique de ce dernier chute rapidement et le courant qui traverse le limiteur de tension **50** augmente alors rapidement. A partir de cet instant, le courant **I2** dans le circuit parallèle **2** est pour l'essentiel dirigé à travers le limiteur de tension **52** qui joue alors activement son rôle de limitation de la tension, limitant la tension **U49** aux bornes de la capacité **49** et dissipant de l'énergie (notamment de l'énergie magnétique accumulée dans le circuit parallèle **2**). Pendant cette étape, la capacité **49** et le limiteur de tension **50,** électriquement en parallèle, créent ensemble une tension **U48** aux bornes du dipôle de transition **48** qui tend à s'opposer au passage du courant dans le circuit parallèle **2.** Cette tension est alors supérieure à la chute de tension dans le circuit parallèle **1,** de sorte que le courant **I2** dans le circuit parallèle **2** diminue et le courant **I1** dans le circuit parallèle **1** augmente.

La dernière étape de l'opération d'ouverture de l'appareil de coupure mécanique **10** consiste en l'ouverture des contacts secondaires **38, 39** de l'interrupteur mécanique secondaire **DS2** de l'appareil de coupure mécanique **10,** à un instant « **tdo** » ultérieur aux instants « **tbo** » et « **tco** ». Entre l'ouverture du commutateur commandé, ici réalisé sous la forme de l'interrupteur mécanique tertiaire **DS3,** et l'ouverture de l'interrupteur mécanique secondaire **DS2,** le courant qui circule dans le circuit parallèle **2** chute en raison de l'opposition de la tension générée par la capacité **49** du dipôle de transition **48.** Lors de l'ouverture de l'interrupteur mécanique secondaire **DS2,** le courant I2S au travers de l'interrupteur mécanique secondaire **DS2** est devenu plus faible que le courant initial, par exemple, inférieur à 80%, de préférence inférieur à 60 % du courant initial. Dans un exemple, on a choisi de provoquer l'ouverture de l'interrupteur mécanique secondaire **DS2** lorsque le courant **I2S** à travers de l'interrupteur mécanique secondaire **DS2** est descendu à une valeur de l'ordre de 600 ampères par rapport à un courant initial de 1000 A. Une tension de protection du limiteur de tension **50** plus élevée, ou une durée [tbo ; tdo] plus longue entre l'ouverture de l'interrupteur mécanique tertiaire **DS3** et l'ouverture de l'interrupteur mécanique secondaire **DS2,** permet de réduire l'intensité du courant qui doit être coupé par **DS2,** c'est-à-dire de réduire le courant qui traverse l'interrupteur mécanique secondaire **DS2** au moment de son ouverture par séparation des contacts secondaires **38, 39.** Si un arc est créé entre les contacts secondaires à ce moment-là, il aura une tension d'arc plus faible et une durée beaucoup plus courte que ce que l'on observerait sans l'invention. Pour l'exemple considéré ici, les calculs permettent de déterminer, que, dans les conditions décrites ci-dessus, cet arc verrait le passage d'un courant d'art de 580 ampères pendant une durée inférieure ou égale à 60 millisecondes: Ceci résulte en une quantité d'énergie d'environ 110 joules. Cette quantité d'énergie peut être facilement évacuée par les contacts secondaires **38, 39** de l'interrupteur mécanique secondaire **DS2,** dont on rappelle qu'il est, déjà selon l'art antérieur, prévu exprès pour absorber l'énergie d'arc à l'ouverture.

Le courant au travers du dipôle de transition **48** s'annule complètement à un instant « **teo** » au bout d'une durée suivant l'ouverture « **tbo** » du commutateur commandé **DS3** qui, dans l'exemple, avec les valeurs indiquées, est par exemple de quelques dizaines de millisecondes, aisément inférieure à 100 millisecondes, par exemple d'environ 80 millisecondes. A partir de l'instant « **teo** », on peut considérer que le courant électrique est alors entièrement transféré vers le premier circuit **1.** Dans le cas d'un appareil de coupure mécanique entièrement mécanique, il est possible de modifier la structure mécanique de l'appareil afin de prolonger l'écart de temps entre l'ouverture de l'interrupteur mécanique tertiaire **DS3** et l'ouverture de l'interrupteur mécanique secondaire **DS2,** de telle sorte à attendre l'annulation complète du courant au travers de la capacité **49** avant de procéder à l'ouverture des contacts de l'interrupteur mécanique secondaire **DS2.** Cela va réduire l'usure des contacts et augmenter la durée de vie de l'appareil de coupure mécanique **10.**

La capacité **49** se décharge alors au travers du circuit de décharge, ici réalisé sous la forme de la résistance de décharge **51** qui est en parallèle de la capacité **49.** La durée de cette décharge dépend directement de la valeur C49 de la capacité **49** et valeur de résistance R51 de la résistance **51.** En première approximation on peut considérer que l'on a affaire à la décharge de la capacité **49** dans la résistance de décharge **51,** avec donc une constante de temps égale à C49 x R51. On pourra considérer que la capacité est déchargée à l'issue d'une durée égale à 3 fois la constante de temps ou 5 fois la constante de temps. On choisira avantageusement les composants pour avoir une durée de décharge comprise entre 1 et 10 secondes. Dans l'exemple, la durée de décharge est de 3s. A l'issue de cette durée de décharge, la tension **U49** aux bornes de la capacité **49** devient donc nulle.

L'opération d'ouverture de l'appareil de coupure mécanique **10** peut être opérée avec une vitesse de séparation des électrodes **20, 22, 24,** et donc des contacts portés par ces électrodes, qui est par exemple être comprise entre 0,01 et 5 mètres par seconde.

De manière générale, la présence de la capacité **49** modifie l'impédance du chemin électrique secondaire **2S.** Plus la valeur de capacité C49 de la capacité **49** est grande, plus l'impédance du chemin électrique secondaire **2S** diminue et donc plus les chances de réussir la commutation augmentent puisqu'on facilite la commutation de **DS3** à **DS2** pendant l'ouverture. En contrepartie, une capacité d'une valeur plus importante et avec des dimensions raisonnables peut être difficile à trouver. Sans la capacité selon l'invention, un sectionneur classique ne peut pas réaliser une opération de commutation de ligne selon les performances souhaitées car la tension d'arc créée à l'ouverture des contacts ne suffit pas pour dépasser/s'opposer à la tension de la ligne parallèle. L'ajout de la capacité permet ainsi de contourner cette limitation. En effet, à l'ouverture de **DS3,** la capacité se charge et une tension est créée ainsi à ses bornes. Lorsque cette tension dépasse la tension **UAB** aux bornes du circuit parallèle **1,** elle rend possible la commutation du circuit **2** vers le circuit parallèle **1.**

De manière générale, le rôle du limiteur de tension **50** est de limiter la tension aux bornes de la capacité **49.** La valeur de la tension de protection du limiteur de tension **50** détermine ainsi la valeur maximale de la tension aux bornes du dipôle de transition **48,** donc aux bornes de la capacité **49.** En choisissant une tension de protection du limiteur de tension d'une plus grande valeur, la tension maximale aux bornes de la capacité **49** et donc la tension **U10** aux bornes du dispositif de coupure **10** augmentent, si bien que le courant bascule plus rapidement du second circuit **2** vers le premier circuit parallèle **1** et la commutation est alors plus susceptible de réussir. Avec une même durée entre l'ouverture de l'interrupteur mécanique tertiaire **DS3** et l'ouverture de l'interrupteur mécanique secondaire **DS2,** une plus grande tension de protection du limiteur de tension **50** conduit à ce que l'interrupteur mécanique secondaire **DS2** coupe un courant plus faible. En revanche, cela augmente les contraintes sur la capacité **49** puisqu'elle devra dans ce cas supporter une tension plus importante à ses bornes.

La capacité **49** est choisie de manière que sa valeur de capacité C49 permette une commutation de courant réussie du chemin électrique tertiaire **2T** vers le chemin électrique secondaire **2S.** En effet, afin de permettre la commutation de courant du chemin électrique tertiaire **2T** vers le chemin électrique secondaire **2S,** une condition nécessaire est de pouvoir créer dans le chemin électrique tertiaire **2T** une tension supérieure à celle dans le chemin électrique secondaire **2S.**

A l'ouverture du commutateur commandé **DS3,** il faut que le courant **I2S** dans le chemin électrique secondaire **2S,** solution de l'équation différentielle qui régit la branche, dépasse la valeur du courant **I2** à commuter. Ce courant **I2S** étant en régime oscillatoire, on ne s'intéressera qu'à son amplitude maximale. Il en résulte ainsi la condition donnée par l'inéquation suivante :

$$C49 \times w'o \times (R3p \times I2 + Uarc) \times \exp[- PI /(2 \times w'o \times T)] – I2 > 0$$

où :

$T = 2 \times Lp / Rp$, avec $Rp = R2p + R3p$, et R3p et R2p représentant les résistances parasites respectivement sur le chemin électrique secondaire **2S** et le chemin électrique tertiaire **2T** ;

$wo^2 = 1 / (Lp \times C49)$, avec $Lp = L2p + L3p$, et L3p et L2p représentant les inductances parasites résultant des composants et des connexions entre les éléments du circuit respectivement sur le chemin électrique secondaire **2S** et le chemin électrique tertiaire **2T** ;

$$w'o^2 = wo^2 – (1 / T^2) ;$$

Uarc est la tension d'arc aux bornes du commutateur commandé **DS3** lors de son ouverture.

La condition ci-dessus est tirée de la résolution de l'équation différentielle suivante, qui régit la variation du courant I2S dans le circuit secondaire en fonction du courant **I2** à interrompre :

$$\frac{d^2Q}{dt^2} + \frac{2}{T} \cdot \frac{dQ}{dt} + wo\ ^2Q = \left(\frac{R3p}{Lp}I2 + \frac{U_{arc}}{Lp}\right)$$

avec Q = J I2S dt, qui représente donc la charge accumulée dans la capacité 49.

En pratique cela conduit à des valeurs de capacité qui sont comprise entre 1 milli-farad et 10 milli-farads, plus préférentiellement entre 3 et 5 milli-farads.

Par exemple, pour les valeurs suivantes :

<p style="text-align:center">R3p = 0.5 milli-Ohm ;</p>

<p style="text-align:center">R2p = 0.1 milli-Ohm ;</p>

<p style="text-align:center">L3p = 0.2 microHenrys ;</p>

<p style="text-align:center">L2p = 0.2 microHenrys ;</p>

<p style="text-align:center">Uarc = 13 Volts</p>

et

<p style="text-align:center">I2 = 1000 Ampères</p>

on obtient une valeur théorique minimale de la capacité 49 qui vaut C49 = 2,36 mF. Dans une conception pratique, cette valeur théorique minimale de la capacité 49 pourra être majorée par l'effet d'un coefficient multiplicateur de sécurité, par exemple égal à 1,1, 1,2, 1,3, .... Ainsi, pour une valeur théorique minimale de 2.36 milli-farads, on peut choisir d'utiliser une capacité 49 ayant une valeur de capacité C39 égale au moins à 3 milli-farads. En revanche, on n'aura pas intérêt à utiliser un coefficient multiplicateur de sécurité trop important, pour ne pas augmenter inutilement le coût et l'encombrement de la capacité 49. Ainsi, pour une valeur théorique minimale de 2.36 milli-farads, on peut choisir d'utiliser une capacité 49 ayant une valeur de capacité C39 égale au plus à 5 milli-farads.

De manière expérimentale ou par simulation numérique, on pourra par exemple déterminer la valeur de la capacité adaptée à un dispositif donné en partant d'une valeur basse dans les gammes ci-dessus, par exemple 1 milli-farad, et en vérifiant la réussite de la coupure électrique dans l'appareil de coupure mécanique **10**. Si la coupure n'est pas réussie, on augmente la valeur de la capacité, par exemple de 0,5 milli-farad et on procède à une nouvelle expérience ou simulation numérique.

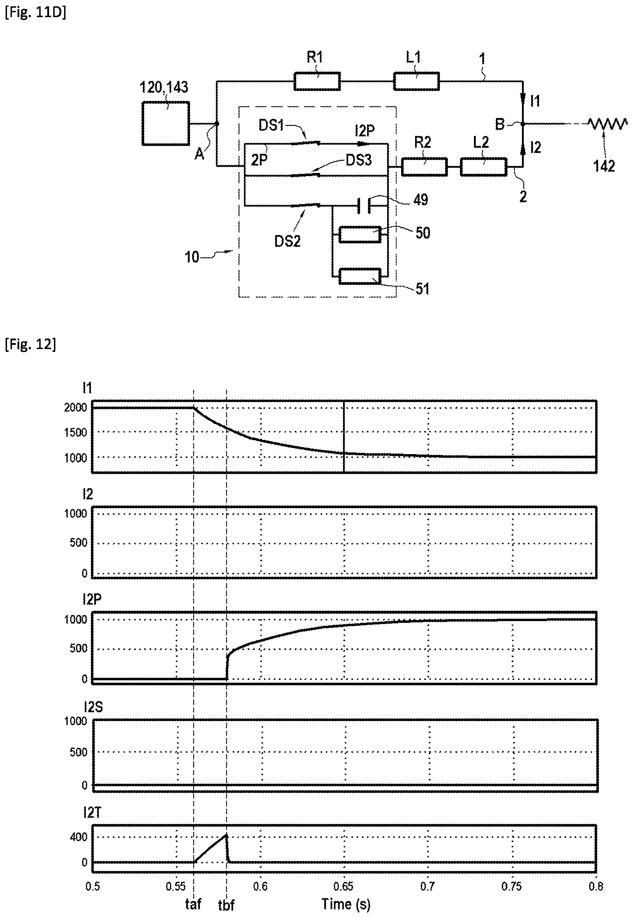

On décrira maintenant, en référence aux **Figs 11A** à **11D**, à la **Fig. 12**, et aux **Figs. 14A-14D** le fonctionnement du même mode de réalisation d'un appareil de coupure mécanique **10** en décrivant les principales étapes d'une opération de fermeture d'un tel appareil, l'appareil étant, comme illustré à la **Fig. 2**, intégré dans le second circuit électrique **2** agencé en parallèle du premier circuit électrique **1**.

Dans un état initial, pour une opération de fermeture, on considère qu'un courant électrique respectivement **I1**, ayant par exemple une intensité de 2000 A, circule dans le premier circuit parallèle **1**, et que l'appareil de coupure mécanique **10** dans le second circuit parallèle **2** est dans un état ouvert de sorte qu'aucun courant électrique ne circule dans ce second circuit parallèle **2**. En termes de valeurs numériques, on reste dans le cas particulier envisagé ci-dessus dans lequel les deux circuits présentent la même résistance équivalente et la même inductance équivalente, mais le fonctionnement serait semblable si ce n'était pas le cas. Dans cet état initial, on considère qu'aucun courant ne traverse l'appareil de coupure mécanique **10**. Cet état initial est représenté sur les **Figs. 4A, 11A** et **14A**. Dans cet état initial, l'appareil de coupure mécanique **10**, qui est agencé dans le second circuit parallèle **2** et qui est dans un état ouvert, est soumis entre ses bornes **28, 30** à une tension **UAB** qui est égale à la chute de tension dans le premier circuit parallèle **1,** entre les points **A** et **B** de jonctions de deux circuits parallèles **1** et **2,** et qui dépend donc du courant électrique respectivement **I1** qui circule dans le premier circuit parallèle **1,** et de la résistance équivalente voire de l'inductance équivalente du premier circuit parallèle **1.**

L'opération de fermeture de l'appareil de coupure mécanique **10** commence par la fermeture du commutateur commandé **DS3.** Dans les cas où ce commutateur commandé est réalisé sous la forme d'un interrupteur mécanique tertiaire **DS3,** par exemple tel que décrit plus haut, les contacts tertiaires **60, 62** se rapprochent à une certaine vitesse, qui peut par exemple être comprise entre 0,01 et 5 mètres par seconde. Initialement, aucun arc électrique n'est présent entres les contacts tertiaires **60, 62.**

Lors du mouvement de fermeture, on veille à ce que l'interrupteur mécanique secondaire **DS2** soit dans une configuration de fermeture telle que l'interrupteur mécanique principal **DS1** et l'interrupteur mécanique secondaire **DS2** sont amenés dans leur état mécaniquement fermé après que le commutateur commandé **DS3** a été amené dans son état électriquement fermé. Ainsi, lors d'une opération de fermeture de l'appareil, l'opération de rétablissement de courant dans le circuit électrique haute tension on ferme électriquement le chemin électrique secondaire **2S** et le chemin électrique principal **28, 30** après la fermeture du chemin électrique tertiaire **2T.** Ceci se traduit par exemple dans le fait que, dans l'exemple de réalisation tel qu'illustré tout particulièrement aux **Figs. 4A,** l'écartement « e3 » entre les contacts tertiaires **60, 62** qui forment l'interrupteur mécanique tertiaire **DS3** est inférieur à l'écartement relatif « e1 » entre les contacts principaux **21, 25** qui forment l'interrupteur mécanique principal **DS1,** et inférieur à l'écartement relatif « e2 » entre les contacts secondaires **38, 39** qui forment l'interrupteur mécanique secondaire **DS2.**

Dans le mode de réalisation des **Figs. 11A** et **14A,** qui reprend l'architecture électrique illustrée à la **Fig. 5A,** dans laquelle le commutateur commandé **DS3** est en parallèle du chemin électrique secondaire **2S,** un arc électrique peut se former entre les contacts tertiaires du commutateur commandé **DS3** quand ces contacts tertiaires **60, 62** sont suffisamment proches l'un de l'autre. En effet, dans ce mode de réalisation, le commutateur commandé **DS3** est alors soumis à la tension **UAB** qui est égale à la chute de tension dans le premier circuit parallèle **1.** Cependant, l'arc entre les contacts tertiaires **60, 62** du commutateur commandé **DS3** disparait rapidement lors de la fermeture définitive des contacts tertiaires, illustré par l'instant « **taf** » sur la **Fig. 12.** Une fois ce contact établi au travers du commutateur commandé **DS3** dans son état fermé, une partie courant commute alors progressivement, du premier circuit parallèle **1** vers le second circuit parallèle **2,** en circulant alors au travers du commutateur commandé **DS3.** Dans le mode de réalisation des **Figs. 11B** et **14B,** ce courant électrique circule donc dans le chemin tertiaire. Ce rétablissement du courant dans le second circuit parallèle **2** s'effectue sans passer par le chemin électrique secondaire **2S,** donc sans passer par le dipôle de transition **48,** donc sans passer par la capacité **49** ni par le limiteur de tension **50.**

Toujours dans le cadre d'un mode de réalisation reprenant l'architecture électrique illustrée à la **Fig. 5A,** dans laquelle le commutateur commandé **DS3** est en parallèle du chemin électrique secondaire **2S,** et en parallèle de l'interrupteur mécanique principal **DS1,** l'opération de fermeture de l'appareil de coupure mécanique **10** peut se poursuivre indifféremment par la fermeture de l'interrupteur mécanique secondaire **DS2,** suivie de celle de l'interrupteur mécanique principal **DS1,** ou, à l'inverse, par la fermeture de l'interrupteur mécanique principal **DS1,** suivie de celle de l'interrupteur mécanique secondaire **DS2.**

Avec l'architecture mécanique du mode de réalisation illustré aux **Figs. 4A** à **4C,** l'opération de fermeture de l'appareil de coupure mécanique **10** se poursuit par la fermeture de l'interrupteur mécanique secondaire **DS2,** ce qui est illustré aux **Figs. 11C** et **14C,** suivie de celle l'interrupteur mécanique principal **DS1,** ce qui est illustré aux **Figs. 11D** et **14D,** dans cet ordre.

En effet, dans tous les cas reprenant l'architecture électrique illustrée à la **Fig. 5A,** une fois que le commutateur commandé **DS3** est fermé, la fermeture de l'interrupteur mécanique secondaire **DS2** et/ou de l'interrupteur mécanique principal **DS1** se fait sous une tension très faible, qui peut être considérée comme négligeable, aux bornes de l'interrupteur mécanique concerné, cette tension étant celle imposée par la fermeture préalable du commutateur commandé **DS3.**

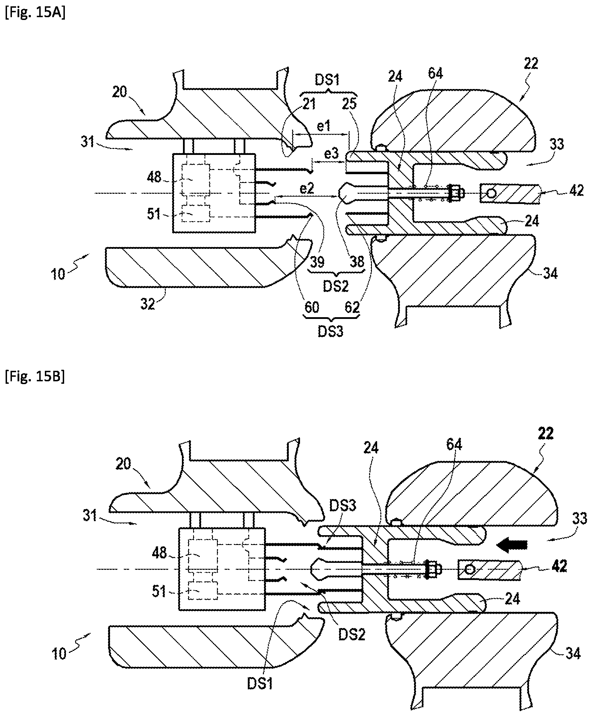

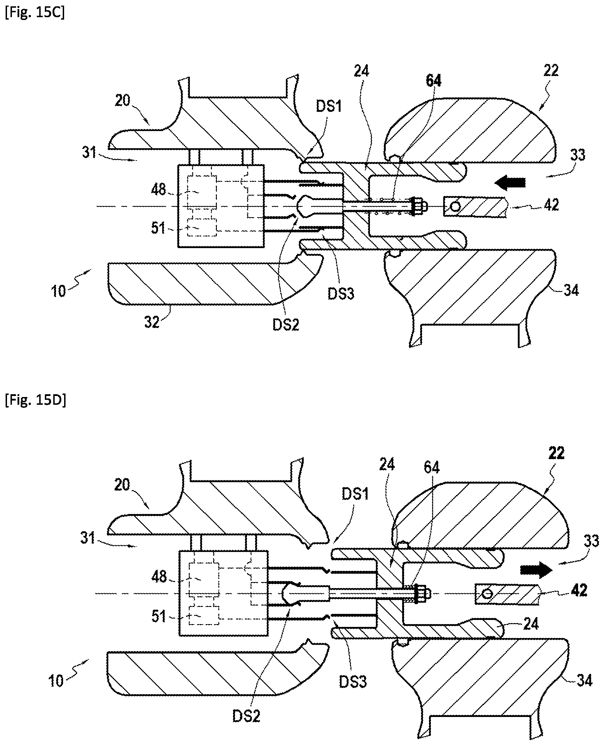

Cependant, pour la fermeture, dans les cas reprenant l'architecture électrique illustrée à la **Fig. 5A,** on peut préférer utiliser une architecture mécanique telle qu'illustré aux **Figs. 15A** à **15D,** qui met en oeuvre, pour l'opération de fermeture de l'appareil de coupure mécanique **10,** après la fermeture du commutateur commandé **DS3,** la fermeture de l'interrupteur mécanique principal **DS1,** suivie de celle de l'interrupteur mécanique secondaire **DS2.**

Ce mode de réalisation est très proche de celui qui a été décrit précédemment en relation avec les **Figs 4A-4C.**

On retrouve la caractéristique selon laquelle, sur chacune des deux électrodes **20, 22,** le contact principal **21, 25** et le contact tertiaire **60, 62** d'une même électrode présentent une position fixe sur l'électrode considérée. De plus, pour une position relative donnée des deux électrodes **20, 22** dans leur mouvement d'ouverture ou de fermeture, le couple de contact principaux **21, 25** et le couple de contacts tertiaires **60, 62** présentent un écartement relatif, respectivement « e1 » et « e3 » entre les contacts du couple qui est différent, ce qui est illustré à la **Fig. 15A.** Ceci est apparent dans une position où les deux interrupteurs mécaniques, principal **DS1** et tertiaire **DS3,** sont dans un état mécaniquement ouvert. On voit que l'écartement relatif « e1 » entre les contacts principaux **21, 25** qui forment l'interrupteur mécanique principal **DS1,** est supérieur à l'écartement relatif « e3 » entre les contacts tertiaires **60, 62** qui forment l'interrupteur mécanique tertiaire **DS3.** Ainsi, pour une position intermédiaire ou une plage de positions intermédiaires des électrodes entre la position d'ouverture électrique et la position de fermeture électrique complète, le chemin électrique principal **2P** est interrompu au niveau du couple de contacts principaux **21, 25** tandis qu'un chemin électrique tertiaire **2T** est fermé au niveau du couple de contacts tertiaires **60, 62,** permettant donc le passage d'un courant électrique, ce qui est illustré plus particulièrement à la **Fig. 15B.** Dans une telle position, l'interrupteur mécanique tertiaire **DS3** crée, à l'intérieur de l'appareil de coupure mécanique, une dérivation qui court-circuite la capacité **49** du dipôle de transition **48.**

Comme dans l'exemple des **Figs 4A-4C,** l'un au moins des contacts du couple de contacts secondaires **38, 39** est mobile sur l'électrode **20, 22, 24** qui le porte, entre une configuration d'ouverture adoptée lors du mouvement d'ouverture et une configuration de fermeture adoptée lors du mouvement de fermeture des électrodes, dans une opération de fermeture de l'appareil de coupure mécanique **10.** Ces configurations d'ouverture et de fermeture correspondent à un écartement relatif « e2 » différent entre les deux contacts du couple de contacts secondaires **38, 39** pour une même position relative donnée des deux électrodes **20, 22, 24,** de telle sorte que :

- lors du mouvement d'ouverture, le couple de contacts secondaires **38, 39** se sépare après les couples de contacts principaux **21, 25** et tertiaires **60, 62** ;
- lors du mouvement de fermeture, le couple de contacts secondaires **38, 39** entre en contact l'un avec l'autre après le couple de contacts tertiaires **60, 62.**

Le contact secondaire **38** de la seconde électrode est aussi mobile sur l'électrode qui le porte, entre une configuration d'ouverture de l'appareil de coupure mécanique **10** qui est adoptée lors du mouvement d'ouverture **(Fig. 15D)** et une configuration de fermeture de l'appareil de coupure mécanique **10** qui est adoptée lors du mouvement de fermeture **(Figs. 15A-15C).** Dans cet exemple c'est donc encore l'interrupteur mécanique secondaire **DS2** qui présente deux configurations différentes par rapport aux électrodes pour modifier la configuration de l'appareil de coupure mécanique **10.** Ces deux configurations de l'interrupteur mécanique secondaire **DS2,** et par conséquent de l'appareil de coupure mécanique **10,** permettent d'obtenir d'une part un premier contact des deux contacts secondaires **38, 39** lors de la fermeture, et d'autre part un dernier contact des deux contacts secondaires **38, 39** lors de l'ouverture, qui correspondent à des positions relatives différentes de deux électrodes **20, 22, 24,** plus particulièrement, dans ce mode de réalisation, à des positions relatives différentes de l'organe de connexion mobile **24** par rapport à la première électrode **20.**

La différence entre les deux modes de réalisation réside dans le fait que la position de premier contact des deux contacts secondaires **38, 39** lors de la fermeture correspond à une position relative encore plus rapprochée de deux électrodes, plus particulièrement, dans ce mode de réalisation, à une position relative plus rapprochée de l'organe de connexion mobile **24** par rapport à la première électrode **20,** que celle qui prévaut pour le mode de réalisation des **Figs. 4A** à **4C.** Cela est permis par la géométrie différente du contact secondaire **39,** qui est décalé axialement par rapport au mode de réalisation des **Figs. 4A** à **4C.** Dans l'exemple des **Figs. 15A** à **15D,** dans la configuration de fermeture des électrodes, l'écartement « e1 » entre les deux contacts principaux **21, 25** est inférieur à l'écartement « e2 » entre les deux contacts secondaires **38, 39,** si bien que, dans une opération de fermeture, on obtient la fermeture de l'interrupteur mécanique principal **DS1** avant celle de l'interrupteur mécanique secondaire **DS2.** Au contraire, lors d'une opération d'ouverture, l'interrupteur mécanique secondaire **DS2** atteint une configuration d'ouverture illustrée à la **Fig. 15D** dans laquelle l'interrupteur mécanique secondaire **DS2** s'ouvre après l'interrupteur mécanique principal **DS1,** et après celle du commutateur commandé **DS3.** Cela est permis par le fait que le contact secondaire **38** de la seconde électrode **22** est mobile sur l'électrode qui le porte, en l'occurrence mobile sur l'organe de connexion mobile **24,** entre deux positions distinctes selon l'axe **A1** par rapport l'organe de connexion mobile **24** qui le porte, une position correspondant à la configuration d'ouverture et l'autre à la configuration de fermeture. Ces deux position distinctes, visibles pour l'une aux **Figs 15A-15C** et pour l'autre à la **Fig. 15D,** présente un écartement supérieur à ce qui était prévu dans le mode de réalisation des **Figs 4A-4C.** La tige de contact **38** qui forme le contact secondaire est donc montée mobile en translation selon l'axe **A1** sur l'organe mobile de connexion **24** selon une course plus grande que ce qui était prévu pour le mode de réalisation des **Figs 4A-4C.**

On note que ce mode de réalisation respecte la même séquence d'ouverture que celui des **Figs 4A-4C,** de sorte que ce qui a été décrit plus haut concernant l'ouverture du dispositif de coupure **10** reste valable dans ce mode de réalisation, avec le même mode de fonctionnement que celui décrit plus haut.

Dans le cadre de l'architecture électrique illustrée à la **Fig. 5B,** dans laquelle le commutateur commandé **DS3** est inséré dans le chemin électrique secondaire **2S** entre l'interrupteur mécanique secondaire **DS2** et une borne de l'appareil de coupure mécanique **10,** l'opération de fermeture de l'appareil de coupure mécanique se fait de préférence dans l'ordre suivant : fermeture du commutateur commandé **DS3,** suivie de celle de l'interrupteur mécanique secondaire **DS2,** suivie de celle de l'interrupteur mécanique principal **DS1.** On rappelle que, dans cette architecture, le commutateur commandé **DS3** peut être un interrupteur électronique ou un interrupteur mécanique. La fermeture du commutateur commandé **DS3** s'effectue de préférence sans tension aux bornes du commutateur commandé **DS3.** En effet, elle s'effectue alors que l'interrupteur mécanique secondaire **DS2** est encore ouvert, et on aura de préférence fait en sorte, notamment grâce au circuit de décharge, formé dans l'exemple par la résistance de décharge **51,** que la capacité **49** soit déchargée avant le début de l'opération de fermeture, ou avant la fermeture du commutateur commandé **DS3.** Dans le cadre de l'architecture de la **Fig. 5B,** la fermeture du commutateur commandé **DS3** ne modifie pas la circulation du courant dans le premier circuit parallèle **1,** le second circuit parallèle **2** restant ouvert. Aussi, lors de la fermeture de l'interrupteur mécanique secondaire **DS2,** un arc électrique peut se former entre les contacts secondaires du commutateur commandé **DS2** quand ces contacts secondaires sont suffisamment proches l'un de l'autre. En effet, dans ce mode de réalisation, l'interrupteur mécanique secondaire **DS2** est, au moment de sa fermeture, soumis à la tension **UAB** qui est égale à la chute de tension dans le premier circuit parallèle **1.** Cependant, l'arc entre les contacts secondaires de l'interrupteur mécanique secondaire **DS2** disparait rapidement lors de la fermeture définitive des contacts. Une fois ce contact établi au travers de l'interrupteur mécanique secondaire **DS2** dans son état fermé, une partie du courant commute alors progressivement, du premier circuit parallèle **1** vers le second circuit parallèle **2,** en circulant alors au travers de l'interrupteur mécanique secondaire **DS2,** donc dans le chemin secondaire **2S.** Ce rétablissement du courant dans le second circuit parallèle **2** à travers le chemin secondaire **2S** s'effectue cependant sans passer par le dipôle de transition **48,** donc sans passer par la capacité **49** ni par le limiteur de tension **50,** car le dipôle de transition **48** est court-circuité par le commutateur commandé **DS3.**

L'invention n'est pas limitée aux exemples décrits et représentés car diverses modifications peuvent y être apportées sans sortir de son cadre.

**Revendications**

1.   Appareil de coupure mécanique **(10)** d'un circuit électrique haute tension **(2),** l'appareil de coupure mécanique comportant :

- une borne amont **(28)** et une borne aval **(30)** qui sont destinées à être reliées électriquement respectivement à une portion amont et une portion aval du circuit électrique **(2)** ;
- dans un chemin électrique principal **(2P)** entre les bornes amont et aval de l'appareil de coupure mécanique, un interrupteur mécanique principal **(DS1)** ayant un couple de contacts principaux **(21, 25)** qui sont mobiles l'un par rapport à l'autre entre au moins une position ouverte correspondant à un état mécaniquement ouvert de l'interrupteur mécanique principal, et au moins une position fermée correspondant à un état mécaniquement et électriquement fermé de l'interrupteur mécanique principal **(DS1)** dans lequel les contacts principaux **(21, 25)** établissent une connexion électrique nominale de l'appareil de coupure mécanique **(10),** ladite connexion électrique nominale permettant le passage d'un courant électrique nominal au travers de l'appareil de coupure mécanique ;
- dans un chemin électrique secondaire **(2S)** qui est électriquement en parallèle de l'interrupteur mécanique principal **(DS1)** entre les bornes amont et aval de l'appareil de coupure mécanique **(10),** un interrupteur mécanique secondaire **(DS2),** ayant un couple de contacts secondaires **(38, 39)** qui sont mobiles l'un par rapport à l'autre entre au moins une position ouverte, correspondant à un état mécaniquement ouvert de l'interrupteur mécanique secondaire **(DS2),** et au moins une position fermée correspondant à un état mécaniquement et électriquement fermé de l'interrupteur mécanique secondaire **(DS2)** ;
- une commande mécanique **(24)** de l'interrupteur mécanique principal **(DS1)** et de l'interrupteur mécanique secondaire **(DS2)** configurée de telle sorte que, dans une opération d'ouverture électrique de l'appareil de coupure mécanique **(10),** l'interrupteur mécanique secondaire **(DS2)** est amené dans son état mécaniquement ouvert après que l'interrupteur mécanique principal **(DS1)** a été amené dans son état mécaniquement ouvert ;
- un dipôle de transition **(48)** comprenant une capacité **(49),** le dipôle de transition **(48)** étant agencé électriquement en série du couple de contacts électriques secondaires **(38, 39)** dans le chemin électrique secondaire **(2S),** et un commutateur commandé **(DS3)** qui, dans un état électriquement fermé, crée à l'intérieur de l'appareil de coupure mécanique une dérivation qui court-circuite la capacité **(49)** du dipôle de transition **(48),** l'appareil de coupure mécanique est **caractérisé en ce que** :

- dans une opération d'ouverture de l'appareil de coupure mécanique **(10),** le commutateur commandé **(DS3)** est amené dans un état électriquement ouvert après que l'interrupteur mécanique principal **(DS1)** a été amené dans son état mécaniquement ouvert et avant que l'interrupteur mécanique secondaire **(DS2)** soit amené dans son état mécaniquement ouvert ;
- dans une opération de fermeture électrique de l'appareil de coupure mécanique **(10),** l'interrupteur mécanique principal **(DS1)** et l'interrupteur mécanique secondaire **(DS2)** sont amenés dans leur état mécaniquement et électriquement fermé après que le commutateur commandé **(DS3)** a été amené dans un état électriquement fermé.

**2.** Appareil de coupure mécanique selon la revendication **1, caractérisé en ce que** le dipôle de transition **(48)** et le chemin électrique secondaire **(2S)** sont dépourvus de composant inductif dédié.

**3.** Appareil de coupure mécanique selon l'une quelconque des revendications précédentes, **caractérisé en ce que** le dipôle de transition **(48)** comporte un circuit de décharge **(51)** de la capacité **(49)** du dipôle de transition **(48).**

**4.** Appareil de coupure mécanique selon l'une quelconque des revendications précédentes, **caractérisé en ce que** le dipôle de transition **(48)** comporte un limiteur de tension **(50)** agencé électriquement en parallèle de la capacité **(49)** dans le dipôle de transition.

**5.** Appareil de coupure mécanique selon la revendication **3** prise en combinaison avec la revendication 4, **caractérisé en ce que** le circuit de décharge comporte une résistance de décharge **(51)** qui est agencée en parallèle électriquement de la capacité **(49)** et en parallèle électriquement du limiteur de tension **(50)** du dipôle de transition **(48).**

**6.** Appareil de coupure mécanique selon l'une quelconque des revendications précédentes, **caractérisé en ce que** le commutateur commandé **(DS3)** est agencé électriquement en parallèle du dipôle de transition **(48),** dans le chemin électrique secondaire **(2S),** entre l'interrupteur mécanique secondaire **(DS2)** et une borne **(28, 30)** de l'appareil de coupure mécanique **(10).**

**7.** Appareil de coupure selon la revendication **6, caractérisé en ce que** le commutateur commandé est un interrupteur mécanique tertiaire **(DS3)** ayant un couple de contacts tertiaires **(60, 62)** qui sont mobiles l'un par rapport à l'autre entre une position ouverte correspondant à un état mécaniquement ouvert de l'interrupteur mécanique tertiaire, et une position fermée correspondant à un état mécaniquement et électriquement fermé de l'interrupteur mécanique tertiaire.

**8.** Appareil de coupure mécanique selon l'une quelconque des revendications **2** à **5, caractérisé en ce que** le commutateur commandé **(DS3)** est agencé électriquement en parallèle du chemin électrique secondaire **(2S), et en ce que** le commutateur commandé **(DS3)** est un interrupteur mécanique tertiaire ayant un couple de contacts tertiaires qui sont mobiles l'un par rapport à l'autre entre au une moins position ouverte correspondant à un état mécaniquement ouvert de l'interrupteur mécanique tertiaire, et au moins une position fermée correspondant à un état mécaniquement et électriquement fermé de l'interrupteur mécanique tertiaire.

**9.** Appareil de coupure mécanique selon l'une des revendications précédentes, **caractérisé en ce que**, dans une opération de fermeture de l'appareil de coupure mécanique **(10),** l'interrupteur mécanique secondaire **(DS2)** est amené dans son état mécaniquement et électriquement fermé après que l'interrupteur mécanique principal **(DS1)** a été amené dans son état électriquement et mécaniquement fermé.

**10.** Appareil de coupure mécanique selon l'une des revendications **1** à **8, caractérisé en ce que**, dans une opération de fermeture de l'appareil de coupure mécanique **(10),** l'interrupteur mécanique secondaire **(DS2)** est amené dans son état mécaniquement et électriquement fermé avant que l'interrupteur mécanique principal **(DS1)** ait été amené dans son état électriquement et mécaniquement fermé.

**11.** Appareil de coupure mécanique selon l'une des revendications précédentes, **caractérisé en ce que** la capacité **(49)** est comprise entre 1 millifarad et 10 millifarads, plus préférentiellement entre 3 et 5 millifarads.

**12.** Procédé comprenant une opération de coupure d'un circuit électrique haute tension puis une opération de rétablissement de courant dans le circuit électrique haute tension, mettant en oeuvre un appareil de coupure mécanique **(10)** ayant une borne amont **(28)** et une borne aval **(30)** qui sont destinées à être reliées électriquement respectivement à une portion amont et une portion aval du circuit électrique, dans lequel, pour l'opération de coupure du circuit électrique haute tension, on procède à une opération d'ouverture de l'appareil de coupure mécanique dans laquelle :

> • on ouvre mécaniquement et électriquement un chemin électrique principal **(28, 30),** entre les bornes amont **(28)** et aval **(30)** de l'appareil de coupure mécanique, qui permet le passage d'un courant électrique nominal, pour faire basculer le courant dans un chemin électrique secondaire **(2S)** qui est électriquement en parallèle du chemin électrique principal **(2P)** entre les bornes amont **(28)** et aval **(30)** de l'appareil de coupure mécanique de manière à charger une capacité **(49)** insérée dans le chemin électrique secondaire **(2S)** ;
> • après l'expiration d'un délai suivant l'ouverture du chemin électrique principal **(2P),** on ouvre mécaniquement et électriquement le chemin électrique secondaire,

**caractérisé en ce que**, lors de l'ouverture du chemin électrique principal **(2P),** on bascule le courant électrique d'abord dans une dérivation, qui est électriquement en parallèle du chemin électrique principal **(2P)** entre les bornes amont **(28)** et aval **(30)** de l'appareil de coupure mécanique et qui court-circuite la capacité **(49),** avant de le basculer vers le chemin électrique secondaire **(2S)** comprenant la capacité **(49),**

et **en ce que**, pour l'opération de rétablissement de courant dans le circuit électrique, on ferme électriquement le chemin électrique secondaire **(2S)** et le chemin électrique principal **(28, 30)** après la fermeture de la dérivation qui court-circuite la capacité **(49).**

13. Procédé selon la revendication **12, caractérisé en ce qu'**on limite la tension aux bornes de la capacité **(49)** par la présence d'un limiteur de tension **(50)** électriquement en parallèle de la capacité **(49)** dans le chemin électrique secondaire **(2S).**

14. Procédé selon la revendication **13, caractérisé en ce que** la dérivation est créée par un interrupteur commandé **(DS3)** faisant office de commutateur commandé qui est interposé dans un chemin électrique tertiaire **(2T)** qui relie directement les deux bornes **(28, 30)** de l'appareil de coupure mécanique **10,** et qui est en parallèle au chemin électrique principal **(2P)** et au chemin électrique secondaire **(2S).**

**Patentansprüche**

1. Mechanische Abschaltvorrichtung (10) eines Hochspannungsstromkreises (2), wobei die mechanische Abschaltvorrichtung beinhaltet:

   - einen vorgelagerten Anschluss (28) und einen nachgelagerten Anschluss (30), die dazu vorgesehen sind, mit einem vorgelagerten Abschnitt bzw. einem nachgelagerten Abschnitt des Stromkreises (2) elektrisch verbunden zu werden,
   - in einem Hauptstrompfad (2P) zwischen dem vorgelagerten und dem nachgelagerten Anschluss der mechanischen Abschaltvorrichtung einen mechanischen Haupttrennschalter (DS1), der ein Paar von Hauptkontakten (21, 25) aufweist, die in Bezug aufeinander zwischen mindestens einer geöffneten Stellung, die einem mechanisch geöffneten Zustand des mechanischen Haupttrennschalters entspricht, und mindestens einer geschlossenen Stellung, die einem mechanisch und elektrisch geschlossenen Zustand des mechanischen Haupttrennschalters (DS1) entspricht, bewegbar sind, wobei die Hauptkontakte (21, 25) eine elektrische Nennverbindung der mechanischen Abschaltvorrichtung (10) herstellen, wobei die elektrische Nennverbindung den Durchgang eines elektrischen Nennstroms durch die mechanische Abschaltvorrichtung ermöglicht,
   - in einem sekundären Strompfad (2S), der mit dem mechanischen Haupttrennschalter (DS1) zwischen dem vorgelagerten und dem nachgelagerten Anschluss der mechanischen Abschaltvorrichtung (10) elektrisch parallel geschaltet ist, einen sekundären mechanischen Trennschalter (DS2), der ein Paar von sekundären Kontakten (38, 39) aufweist, die in Bezug aufeinander zwischen mindestens einer geöffneten Stellung, die einem mechanisch geöffneten Zustand des sekundären mechanischen Trennschalters (DS2) entspricht, und mindestens einer geschlossenen Stellung, die einem mechanisch und elektrisch geschlossenen Zustand des sekundären mechanischen Trennschalters (DS2) entspricht, bewegbar sind,
   - eine mechanische Steuerung (24) des mechanischen Haupttrennschalters (DS1) und des sekundären mechanischen Trennschalters (DS2), die derart ausgestaltet ist, dass bei einem elektrischen Öffnungsvorgang der mechanischen Abschaltvorrichtung (10) der sekundäre mechanische Trennschalter (DS2) in seinen mechanisch geöffneten Zustand gebracht wird, nachdem der mechanische Haupttrennschalter (DS1) in seinen mechanisch geöffneten Zustand gebracht wurde,
   - einen Übergangsdipol (48), der einen Kondensator (49) umfasst, wobei der Übergangsdipol (48) mit dem Paar von sekundären elektrischen Kontakten (38, 39) in dem sekundären Strompfad (2S) elektrisch in Reihe geschaltet ist, und
   - einen gesteuerten Schalter (DS3), der in einem elektrisch geschlossenen Zustand im Inneren der mechanischen Abschaltvorrichtung eine Abzweigung bildet, die den Kondensator (49) des Übergangsdipols (48) kurzschließt,

   wobei die mechanische Abschaltvorrichtung **dadurch gekennzeichnet ist, dass**:

   - bei einem Öffnungsvorgang der mechanischen Abschaltvorrichtung (10) der gesteuerte Schalter (DS3) in einen elektrisch geöffneten Zustand gebracht wird, nachdem der mechanische Haupttrennschalter (DS1) in seinen mechanisch geöffneten Zustand gebracht wurde und bevor der sekundäre mechanische Trennschalter (DS2) in seinen mechanisch geöffneten Zustand gebracht wird,

- bei einem elektrischen Schließvorgang der mechanischen Abschaltvorrichtung (10) der mechanische Haupttrennschalter (DS1) und der sekundäre mechanische Trennschalter (DS2) in ihren mechanisch und elektrisch geschlossenen Zustand gebracht werden, nachdem der gesteuerte Schalter (DS3) in einen elektrisch geschlossenen Zustand gebracht wurde.

2. Mechanische Abschaltvorrichtung nach Anspruch 1, **dadurch gekennzeichnet, dass** der Übergangsdipol (48) und der sekundäre Strompfad (2S) frei von dedizierten induktiven Bauelementen sind.

3. Mechanische Abschaltvorrichtung nach einem der vorhergehenden Ansprüche, **dadurch gekennzeichnet, dass** der Übergangsdipol (48) einen Ladekreis (51) des Kondensators (49) des Übergangsdipols (48) beinhaltet.

4. Mechanische Abschaltvorrichtung nach einem der vorhergehenden Ansprüche, **dadurch gekennzeichnet, dass** der Übergangsdipol (48) einen Spannungsbegrenzer (50) beinhaltet, der mit dem Kondensator (49) in dem Übergangsdipol elektrisch parallel geschaltet ist.

5. Mechanische Abschaltvorrichtung nach Anspruch 3 in Kombination mit Anspruch 4, **dadurch gekennzeichnet, dass** der Entladekreis einen Entladewiderstand (51) beinhaltet, der mit dem Kondensator (49) elektrisch parallel geschaltet ist und mit dem Spannungsbegrenzer (50) des Übergangsdipols (48) elektrisch parallel geschaltet ist.

6. Mechanische Abschaltvorrichtung nach einem der vorhergehenden Ansprüche, **dadurch gekennzeichnet, dass** der gesteuerte Schalter (DS3) mit dem Übergangsdipol (48) in dem sekundären Strompfad (2S) zwischen dem sekundären mechanischen Trennschalter (DS2) und einem Anschluss (28, 30) der mechanischen Abschaltvorrichtung (10) elektrisch parallel geschaltet ist.

7. Mechanische Abschaltvorrichtung nach Anspruch 6, **dadurch gekennzeichnet, dass** der gesteuerte Schalter ein tertiärer mechanischer Trennschalter (DS3) ist, der ein Paar von tertiären Kontakten (60, 62) aufweist, die in Bezug aufeinander zwischen einer geöffneten Stellung, die einem mechanisch geöffneten Zustand des tertiären mechanischen Trennschalters entspricht, und einer geschlossenen Stellung, die einem mechanisch und elektrisch geschlossenen Zustand des tertiären mechanischen Trennschalters entspricht, bewegbar sind.

8. Mechanische Abschaltvorrichtung nach einem der Ansprüche 2 bis 5, **dadurch gekennzeichnet, dass** der gesteuerte Schalter (DS3) mit dem sekundären Strompfad (2S) elektrisch parallel geschaltet ist und dass der gesteuerte Schalter (DS3) ein tertiärer mechanischer Trennschalter ist, der ein Paar von tertiären Kontakten aufweist, die in Bezug aufeinander zwischen mindestens einer geöffneten Stellung, die einem mechanisch geöffneten Zustand des tertiären mechanischen Trennschalters entspricht, und mindestens einer geschlossenen Stellung, die einem mechanisch und elektrisch geschlossenen Zustand des tertiären mechanischen Trennschalters entspricht, bewegbar sind.

9. Mechanische Abschaltvorrichtung nach einem der vorhergehenden Ansprüche, **dadurch gekennzeichnet, dass** bei einem Schließvorgang der mechanischen Abschaltvorrichtung (10) der sekundäre mechanische Trennschalter (DS2) in seinen mechanisch und elektrisch geschlossenen Zustand gebracht wird, nachdem der mechanische Haupttrennschalter (DS1) in seinen elektrisch und mechanisch geschlossenen Zustand gebracht wurde.

10. Mechanische Abschaltvorrichtung nach einem der Ansprüche 1 bis 8, **dadurch gekennzeichnet, dass** bei einem Schließvorgang der mechanischen Abschaltvorrichtung (10) der sekundäre mechanische Trennschalter (DS2) in seinen mechanisch und elektrisch geschlossenen Zustand gebracht wird, bevor der mechanische Haupttrennschalter (DS1) in seinen elektrisch und mechanisch geschlossenen Zustand gebracht wird.

11. Mechanische Abschaltvorrichtung nach einem der vorhergehenden Ansprüche, **dadurch gekennzeichnet, dass** der Kondensator (49) zwischen 1 Millifarad und 10 Millifarad, noch bevorzugter zwischen 3 und 5 Millifarad, aufweist.

12. Verfahren, umfassend einen Abschaltvorgang eines Hochspannungsstromkreises, dann einen Wiederherstellungsvorgang von Strom in dem Hochspannungsstromkreis, mit dem eine mechanische Abschaltvorrichtung (10) umgesetzt wird, die einen vorgelagerten Anschluss (28) und einen nachgelagerten Anschluss (30) aufweist, die dazu vorgesehen sind, mit einem vorgelagerten Abschnitt bzw. einem nachgelagerten Abschnitt des Stromkreises elektrisch verbunden zu werden, wobei für den Abschaltvorgang des Hochspannungsstromkreises ein Öffnungsvorgang der mechanischen Abschaltvorrichtung durchgeführt wird, wobei:

• ein elektrischer Hauptstrompfad (28, 30) zwischen dem vorgelagerten (28) und dem nachgelagerten (30) Anschluss der mechanischen Abschaltvorrichtung mechanisch und elektrisch geöffnet wird, wodurch der Durchgang eines elektrischen Nennstroms ermöglicht wird, um den Strom in einem sekundären Strompfad (2S), der mit dem Hauptstrompfad (2P) zwischen dem vorgelagerten (28) und dem nachgelagerten (30) Anschluss der mechanischen Abschaltvorrichtung elektrisch parallel geschaltet ist, derart umzuschalten, dass ein in den sekundären Strompfad (2S) eingesetzter Kondensator (49) geladen wird,
• nach Ablauf eines Zeitraums nach dem Öffnen des Hauptstrompfads (2P) der sekundäre Strompfad mechanisch und elektrisch geöffnet wird,
**dadurch gekennzeichnet, dass** beim Öffnen des Hauptstrompfads (2P) der elektrische Strom zunächst in eine Abzweigung umgeschaltet wird, die mit dem Hauptstrompfad (2P) zwischen dem vorgelagerten (28) und dem nachgelagerten (30) Anschluss der mechanischen Abschaltvorrichtung elektrisch parallel geschaltet ist und die den Kondensator (49) kurzschließt, bevor er auf den sekundären Strompfad (2S), der den Kondensator (49) umfasst, umgeschaltet wird,
und dass für den Wiederherstellungsvorgang von Strom in dem Stromkreis der sekundäre Strompfad (2S) und der Hauptstrompfad (28, 30) nach dem Schließen der Abzweigung, die den Kondensator (49) kurzschließt, elektrisch geschlossen wird.

13. Verfahren nach Anspruch 12, **dadurch gekennzeichnet, dass** die Spannung an den Anschlüssen des Kondensators (49) durch das Vorhandensein eines Spannungsbegrenzers (50), der mit dem Kondensator (49) in dem sekundären Strompfad (2S) elektrisch parallel geschaltet ist, begrenzt wird.

14. Verfahren nach Anspruch 13, **dadurch gekennzeichnet, dass** die Abzweigung durch einen gesteuerten Trennschalter (DS3) gebildet wird, der als gesteuerter Schalter dient, der in einem tertiären Strompfad (2T) angeordnet ist, der die beiden Anschlüsse (28, 30) der mechanischen Abschaltvorrichtung 10 direkt verbindet, und der mit dem Hauptstrompfad (2P) und mit dem sekundären Strompfad (2S) parallel geschaltet ist.

**Claims**

1. An apparatus (10) for mechanically cutting off a high-voltage electrical circuit (2), the mechanical cut-off apparatus including:

    - an upstream terminal (28) and a downstream terminal (30) which are intended to be electrically connected respectively to an upstream portion and a downstream portion of the electrical circuit (2);
    - in a main electrical path (2P) between the upstream and downstream terminals of the mechanical cut-off apparatus, a main mechanical switch (DS1) having a pair of main contacts (21, 25) which are movable relative to each other between at least one open position corresponding to a mechanically open state of the main mechanical switch, and at least one closed position corresponding to a mechanically and electrically closed state of the main mechanical switch (DS1) in which the main contacts (21, 25) establish a rated electrical connection of the mechanical cut-off apparatus (10), said rated electrical connection allowing the passage of a rated electrical current through the mechanical cut-off apparatus;
    - in a secondary electrical path (2S) which is electrically in parallel with the main mechanical switch (DS1) between the upstream and downstream terminals of the mechanical cut-off apparatus (10), a secondary mechanical switch (DS2), having a pair of secondary contacts (38, 39) which are movable relative to each other between at least one open position, corresponding to a mechanically open state of the secondary mechanical switch (DS2), and at least one closed position corresponding to a mechanically and electrically closed state of the secondary mechanical switch (DS2);
    - a mechanical control (24) of the main mechanical switch (DS1) and of the secondary mechanical switch (DS2) configured such that, in an operation of electrically opening the mechanical cut-off apparatus (10), the secondary mechanical switch (DS2) is brought into its mechanically open state after the main mechanical switch (DS1) has been brought into its mechanically open state;
    - a transition dipole (48) comprising a capacitor (49), the transition dipole (48) being arranged electrically in series with the pair of secondary electrical contacts (38, 39) in the secondary electrical path (2S), and
    - a controlled switch (DS3) which, in an electrically closed state, creates inside the mechanical cut-off apparatus a bypass that short-circuits the capacitor (49) of the transition dipole (48), the mechanical cut-off apparatus is **characterized in that**:

- in an operation of opening the mechanical cut-off apparatus (10), the controlled switch (DS3) is brought into an electrically open state after the main mechanical switch (DS1) has been brought into its mechanically open state and before the secondary mechanical switch (DS2) is brought into its mechanically open state;
- in an operation of electrically closing the mechanical cut-off apparatus (10), the main mechanical switch (DS1) and the secondary mechanical switch (DS2) are brought into their mechanically and electrically closed state after the controlled switch (DS3) was brought into an electrically closed state.

2. The mechanical cut-off apparatus according to claim 1, **characterized in that** the transition dipole (48) and the secondary electrical path (2S) are devoid of dedicated inductive component.

3. The mechanical cut-off apparatus according to any one of the preceding claims, **characterized in that** the transition dipole (48) includes a circuit (51) for discharging the capacitor (49) from the transition dipole (48).

4. The mechanical cut-off apparatus according to any one of the preceding claims, **characterized in that** the transition dipole (48) includes a voltage limiter (50) arranged electrically in parallel with the capacitor (49) in the transition dipole.

5. The mechanical cut-off apparatus according to claim 3 taken in combination with claim 4, **characterized in that** the discharge circuit includes a discharge resistor (51) which is arranged electrically in parallel with the capacitor (49) and electrically in parallel with the voltage limiter (50) of the transition dipole (48).

6. The mechanical cut-off apparatus according to any one of the preceding claims, **characterized in that** the controlled switch (DS3) is arranged electrically in parallel with the transition dipole (48), in the secondary electrical path (2S), between the secondary mechanical switch (DS2) and a terminal (28, 30) of the mechanical cut-off apparatus (10).

7. The mechanical cut-off apparatus according to claim 6, **characterized in that** the controlled switch is a tertiary mechanical switch (DS3) having a pair of tertiary contacts (60, 62) which are movable relative to each other between an open position corresponding to a mechanically open state of the tertiary mechanical switch, and a closed position corresponding to a mechanically and electrically closed state of the tertiary mechanical switch.

8. The mechanical cut-off apparatus according to any one of claims 2 to 5, **characterized in that** the controlled switch (DS3) is arranged electrically in parallel with the secondary electrical path (2S), and **in that** the controlled switch (DS3) is a tertiary mechanical switch having a pair of tertiary contacts which are movable relative to each other between at least one open position corresponding to a mechanically open state of the tertiary mechanical switch, and at least one closed position corresponding to a mechanically and electrically closed state of the tertiary mechanical switch.

9. The mechanical cut-off apparatus according to any of the preceding claims, **characterized in that**, in an operation of closing the mechanical cut-off apparatus (10), the secondary mechanical switch (DS2) is brought into its mechanically and electrically state closed after the main mechanical switch (DS1) has been brought into its electrically and mechanically closed state.

10. The mechanical cut-off apparatus according to any of claims 1 to 8, **characterized in that**, in an operation of closing the mechanical cut-off apparatus (10), the secondary mechanical switch (DS2) is brought to its mechanically and electrically closed state before the main mechanical switch (DS1) has been brought into its electrically and mechanically closed state.

11. The mechanical cut-off apparatus according to any of the preceding claims, **characterized in that** the capacitor (49) is comprised between 1 millifarad and 10 millifarads, more preferably between 3 and 5 millifarads.

12. A method comprising an operation of cutting off a high-voltage electrical circuit then an operation of restoring current in the high-voltage electrical circuit, implementing a mechanical cut-off apparatus (10) with an upstream terminal (28) and a downstream terminal (30) which are intended to be electrically connected respectively to an upstream portion and to a downstream portion of the electrical circuit, wherein, for the operation of cutting off the high-voltage electrical circuit, an operation of opening the mechanical cut-off apparatus is carried out, in which:

• a main electrical path (28, 30) is mechanically and electrically opened, between the upstream (28) and downstream (30) terminals of the mechanical cut-off apparatus, which allows the passage of a rated electric current, to switch the current in a secondary electrical path (2S) which is electrically parallel with the main electrical path (2P) between the upstream (28) and downstream (30) terminals of the mechanical cut-off apparatus so as to charge a capacitor (49) inserted in the secondary electrical path (25);

• after the expiry of a period following the opening of the main electrical path (2P), the secondary electrical path is mechanically and electrically opened,

**characterized in that**, when the main electrical path (2P) is opened, the electric current is first switched into a bypass, which is electrically in parallel with the main electrical path (2P) between the upstream (28) and downstream (30) terminals of the mechanical cut-off apparatus and which short-circuits the capacitor (49), before switching it to the secondary electrical path (2S) comprising the capacitor (49),

and **in that**, for the operation of restoring current in the electrical circuit, the secondary electrical path (2S) and the main electrical path (28, 30) are electrically closed after the closing of the bypass that short-circuits the capacitor (49).

13. The method according to claim 12, **characterized in that** the voltage across the capacitor (49) is limited by the presence of a voltage limiter (50) electrically in parallel with the capacitor (49) in the secondary electrical path (25).

14. The method according to claim 13, **characterized in that** the bypass is created by a controlled switch (DS3) acting as a controlled switch which is interposed in a tertiary electrical path (2T) which directly connects the two terminals (28, 30) of the mechanical cut-off apparatus 10, and which is in parallel with the main electrical path (2P) and with the secondary electrical path (2S).

[Fig. 1]

[Fig. 2]

[Fig. 3A]

[Fig. 3B]

[Fig. 3C]

[Fig. 4A]

[Fig. 4B]

[Fig. 4C]

[Fig. 5A]

[Fig. 5B]

[Fig. 6A]

[Fig. 6B]

[Fig. 6C]

[Fig. 6D]

[Fig. 7]

[Fig. 8]

[Fig. 9]

[Fig. 10]

[Fig. 11A]

[Fig. 11B]

[Fig. 11C]

[Fig. 11D]

[Fig. 12]

[Fig. 13A]

[Fig. 13B]

EP 4 104 195 B1

[Fig. 13C]

[Fig. 13D]

42

[Fig. 14A]

[Fig. 14B]

[Fig. 14C]

[Fig. 14D]

[Fig. 15A]

[Fig. 15B]

[Fig. 15C]

[Fig. 15D]

## RÉFÉRENCES CITÉES DANS LA DESCRIPTION

**Documents brevets cités dans la description**

- WO 2019077269 A
- FR 2668648 A1